# EUROPÄISCHE PATENTSCHRIFT

(11) **EP 3 830 209 B1**
(45) Veröffentlichungstag und Bekanntmachung des Hinweises auf die Patenterteilung: **17.04.2024**
(21) Anmeldenummer: 19727348.5
(22) Anmeldetag: 27.05.2019
(51) Int. Cl.: C09J 9/00, C09J 7/38

(54) **WIEDERABLÖSBARER HAFTKLEBESTREIFEN**
REMOVABLE PRESSURE-SENSITIVE ADHESIVE STRIP
BANDE AUTOADHÉSIVE REPOSITIONNABLE

(30) Priorität: 28.05.2018 DE 102018208348; 23.08.2018 DE 102018214237
(43) Veröffentlichungstag der Anmeldung: 09.06.2021
(73) Patentinhaber: tesa SE, 22848 Norderstedt (DE)
(72) Erfinder: JUNGHANS, Andreas, 22457 Hamburg (DE); LÜHMANN, Bernd, 22844 Norderstedt (DE); EGGER, Michael, 22297 Hamburg (DE); DOLLASE, Thilo, 22397 Hamburg (DE); LURK, Klaus, 77652 Offenburg (DE); KIENZLE, Markus, 77716 Haslach (DE)
(74) Vertreter: tesa SE
(86) Internationale Anmeldenummer: PCT/EP2019/063595
(87) Internationale Veröffentlichungsnummer: WO 2019/228953

(56) Entgegenhaltungen:
- EP-A2- 0 149 135
- WO-A1-01/53422
- DE-C1- 4 222 849
- US-A1- 2017 361 570

## Beschreibung

### Hintergrund/Stand der Technik:

Durch dehnendes Verstrecken rückstandsfrei wiederablösbare Selbstklebestreifen sind aus dem Stand der Technik bekannt. Beispiele sind in US 4024312 A, DE 3331016 A1, DE 4222849 C1, WO 92/11333 A1 und WO 01/53422 A1 beschrieben.

Solche Klebeprodukte bieten die Möglichkeit, zwei Substrate miteinander zu verbinden und die Verbindung zu einem späteren Zeitpunkt rückstands- und zerstörungsfrei wieder zu lösen.

Damit solche Klebeprodukte die beiden Aufgaben, nämlich einerseits eine verlässliche Verklebung und andererseits zerstörungs- und rückstandfreies Wiederablösen zu gewährleisten, werden an solche Klebeprodukte sehr hohe Anforderungen gestellt.

So wird für eine verlässliche Verklebungsleistung eine gute Adhäsion auf dem Substrat bzw. den Substraten gefordert und häufig, da solche Verklebungen in manchen Anwendungen hohen Scherbelastungen ausgesetzt werden können, auch eine hohe Kohäsion. Für ein verlässliches Wiederablösen unter dehnendem Verstrecken wird darüber hinaus Reißerbeständigkeit der Klebprodukte verlangt, also mechanische Festigkeit.

In der Vergangenheit wurden sehr unterschiedliche Produktdesigns und Haftklebeformulierungen für solche Verklebungsaufgaben vorgeschlagen. Dabei haben sich Formulierungen auf Basis von Blockcopolymeren enthaltend zumindest einen Polyvinylaromatenblock und zumindest einen Polydienblock als besonders vorteilhaft erwiesen.

Ein Klebeartikel, der zum Wiederablösen durch dehnendes Verstrecken vorgesehen ist, lässt sich in allgemeiner Form durch seine drei Hauptdimensionen definieren, seine Länge L, entlang dieser Dimension erfolgt häufig das dehnende Verstrecken zum Ablösen, seine Dicke D, die den Abstand der beiden verklebten Substrate im Verklebungsverbund definiert, und seine Breite B, die Ausprägung des Klebeprodukts senkrecht zur Länge und Dicke. Auch wenn die Ausgestaltung der Haftklebemasse(n) von zentraler Bedeutung für das Verklebungs- und Ablöseverhalten des Klebeprodukts ist, so hat auch das Produktdesign selbst einen Einfluss insbesondere auf das Ablöseverhalten. Es hat sich dabei u. a. gezeigt, dass Selbstklebeprodukte dann vorteilhafte Reißerbeständigkeit beim Ablösen durch dehnendes Verstrecken bieten, wenn ihre Breite B sehr klein ist (DE 198 42 864 A1) oder sich die Breite entgegen der Ablöserichtung verjüngt (DE 43 39 604 A1, DE 44 28 587 A1, DE 198 42 865 A1, DE 199 38 693 A1).

Eine Ursache beim Ablösevorgang reißender Klebebandstreifen sind hohe Spannungen im Übergangsbereich zwischen dem noch verklebten Bereich des Klebebandstreifens und dem aus der Klebfuge bereits herausgelösten, gedehnten, nicht mehr verklebten Bereich des Klebebandsteifens. Beim Ablösen durch dehnendes Verstrecken verjüngt sich ein z. B. näherungsweise quaderförmiger oder rhomboedrischer Klebestreifen mit seinen Dimensionen L, D, B ausgehend von seiner Ursprungsbreite B und Dicke D (im verklebten Zustand) infolge dehnender Verstreckung. Im Idealfall einer weitestgehend entropieelastischen isotropen Haftklebemasse reduzieren sich Dicke D und Breite B näherungsweise im Verhältnis der Quadratwurzel zur Verstreckung (angenommene Volumenkonstanz). Eine sehr geringe Breite B der Klebestreifen bedingt daher eine geringe absolute Verjüngung des Klebestreifens im Ablösebereich und dadurch geringe Spannungsunterschiede im Übergangsbereich zwischen dem noch verklebten Bereich des Klebebandstreifens und dem aus der Klebfuge bereits herausgelösten, gedehnten, nicht mehr verklebten Bereich des Klebebandsteifens. Entsprechende Klebestreifen reißen daher nicht oder weniger häufig beim Lösen der Klebbindung durch dehnendes Verstrecken. Je breiter die Klebestreifen werden, umso höher werden die Spannungen im Übergangsbereich zwischen dem noch verklebten Bereich des Klebebandstreifens und dem aus der Klebfuge bereits herausgelösten, gedehnten, nicht mehr verklebten Bereich des Klebebandsteifens. Entsprechend sind bekannte, durch dehnendes Verstecken in der Verklebungsebene ablösbare Klebebandstreifen in ihrer Breite begrenzt; ab einer bestimmten Breite der Klebebänder reißen diese infolge zu hoher Spannungen im Übergangsbereich zwischen dem noch verklebten Bereich des Klebebandstreifens und dem aus der Klebfuge bereits herausgelösten, gedehnten, nicht mehr verklebten Bereich des Klebebandsteifens, beim Herauslösen aus der Klebfuge.

Klebeartikel, die für Wiederablösbarkeit durch dehnendes Verstrecken ausgelobt werden und eine größere Breite aufweisen sind in WO 2009/151686 A2 ("width to thickness ratio" B:D von mindestens 25:1) beschrieben.

Das Wiederablösen von Selbstklebeartikeln mit großer Breite aus einem Verklebungsverbund stellt aber, wie zuvor beschrieben, nach wie vor eine nicht gelöste technische Herausforderung dar, insbesondere auch dann, wenn die Breite des Selbstklebebands so groß ist, dass mit zwei Händen der Prozess des dehnenden Verstreckens erfolgen muss.

Als zusätzlich erschwerend für den Wiederablöseprozess wirkende Größe erweist sich die Produktdicke. Je dünner der Selbstklebeartikel, desto anfälliger gegenüber Reißern beim Ablöseprozess unter dehnendem Verstrecken zeigt sich der Klebestreifen.

Selbstklebeprodukte mit strukturierten Klebeschichten an sich sind bekannt. Zu Beispielszwecken seien US 5,296,277 A, US 5,362,516 A, US 5,141,790 A, US 5,897,930 A und US 6,197,397 B1 genannt. Diese Beschreibungen lehren, wie eine Struktur in einer Klebeschicht durch Kontakt mit der Oberfläche eines Trennliners erzeugt werden kann. Weitere Beispiele für Selbstklebeartikel mit strukturierten Oberflächen sind in WO 2014/032905 A1, WO 2016/106040 A1, WO 2017/040748 A1, EP 279 579 A1, US 2,399,545 A, US 3,811,438 A und EP 1 084 204 A1 beschrieben.

Stand der Technik zu Selbstklebeartikeln mit einer strukturierten Selbstklebeschicht, für die Ablösen durch dehnendes Verstrecken beschrieben ist, wurde durch folgende Offenbarungen geschaffen:
WO 2014/105433 A1 und WO 2014/204803 A1 beschreiben doppelseitige Klebeartikel mit einem elastischen Trägermaterial, die auf der einen Seite eine Kleberstruktur und auf der anderen Seite eine Klebestruktur aufweisen, wobei die beiden Strukturen so angeordnet sind, dass ihre jeweilige Projektion im Wesentlichen nicht überlappt. In spezieller Weise relativ zueinander angeordnete Strukturen sind nur aufwändig und daher nicht auf sehr wirtschaftliche Weise realisierbar.
WO 2014/209637 A1 und WO 2014/209895 A1 beschreiben einen Gegenstand bzw. ein Verfahren für seine Herstellung, der aus einem Trennliner, einer anpassungsfähigen Trägerschicht und einer dazwischen angeordneten Klebeschicht besteht, wobei die Klebeschicht eine Vielzahl von Streifen einer ersten Klebstoffsorte und alternierend dazu eine Vielzahl von Streifen einer zweiten Klebstoffsorte aufweist. Für die Realisierung derartiger alternierender Klebeschichten sind spezielle Herstellverfahren erforderlich, die häufig nicht standardmäßig zur Verfügung stehen.
US 2017/361570 A1 beschreibt ein Klebeband mit einer Basisschicht, die Bereiche aufweist, in die Klebemasse eingebracht ist. Das Klebeband ist durch Verstrecken aus einem Klebeverbund wiederablösbar. Gemäß der Offenbarung wird durch die Strukturierung ein gegenüber Reißern beständigeres Ablösen unter Dehnung erreicht. Es ist ein bedeutender Teil der Anmeldung, dass das Klebeband trotz der im Inneren befindlichen Strukturierung eine einheitliche Gesamtdicke D aufweist. Die beschriebenen Produkte erfordern aufwändige Herstellverfahren, da zunächst die strukturierte Basisschicht erzeugt werden muss, die dann anschließend mit der Klebemasse versehen wird.
WO 01/14488 A1 beschreibt Klebebänder, die abwechselnd klebende und nicht klebende Bereiche aufweisen. Die nicht klebenden Bereiche dienen nach Vereinzelung in einzelne Klebebandabschnitte als Anfasser.

### Aufgabe:

Es besteht daher weiterhin die Aufgabe, Haftklebestreifen zur Verfügung zu stellen, die in ihrem Ablöseverhalten weiter verbessert sind und trotzdem noch gute Verklebungseigenschaften aufweisen, und im Idealfall in beliebiger Breite aus Klebfugen durch dehnendes Verstrecken möglichst einfach herausgelöst werden können. Sie sollen zudem vorzugsweise eine möglichst geringe strukturelle Komplexität aufweisen, so dass eine wirtschaftliche Herstellbarkeit möglich ist.

### Lösung:

Überraschenderweise lässt sich die Aufgabe lösen durch Haftklebestreifen, die in der Verklebungsebene orthogonal zur Richtung, in der sich die Verklebung durch dehnendes Verstrecken des Klebebandstreifens lösen lässt, eine erfindungsgemäße Änderung des Auftrags an Klebemasse aufweisen und die in ihrem Produktaufbau einfacher gestaltet sind als Klebesysteme aus dem Stand der Technik. Erfindungsgemäß weist mindestens eine Oberfläche der im Selbstklebeprodukt, d.h. Haftklebestreifen, enthaltenen Haftklebemasseschicht HK1 ein oder mehrere haftklebrige Strukturelemente SE auf. Diese führen zu einem strukturierten Oberflächenprofil des Haftklebestreifens, d.h. der Haftklebestreifen ist auf mindestens einer außenliegenden Oberfläche strukturiert. Erfindungsgemäß ist die Haftklebemasseschicht HK1 durchgängig. Vorzugsweise reichen die Strukturelemente SE bis zu mindestens einem der Ränder der Haftklebemasseschicht HK1, insbesondere bis zu zwei Rändern der Haftklebemasseschicht HK1.

Die Ausführungsformen der Erfindung beziehen sich jeweils sowohl auf Haftklebestreifen mit genau einem Strukturelement, als auch auf Haftklebestreifen mit mehreren Strukturelementen.

Bevorzugte Ausführungsformen des Haftklebestreifens befinden sich in den abhängigen Ansprüchen.

Die Begriffe "selbstklebend" und "haftklebend", "Selbstklebemasse" und "Haftklebemasse" und ähnliche Begriffspaare werden im Rahmen dieser Schrift synonym verwendet.

Erfindungsgemäß sind auf mindestens einer Oberfläche der Haftklebemasseschicht HK1 ein oder mehrere, vorzugsweise mehrere, haftklebrige Strukturelemente angeordnet, d.h. mindestens eine Oberfläche der Haftklebemasseschicht HK1 weist ein oder mehrere, vorzugsweise mehrere, haftklebrige Strukturelemente auf. Unter dem Begriff "Anordnung" von Strukturelementen bzw. Schichten auf den Oberflächen weiterer Schichten wird verstanden, dass die Oberfläche die entsprechenden Strukturelemente bzw. Schichten unmittelbar oder mittelbar aufweist. Damit kann in der vorliegenden Anmeldung eine solche Anordnung gemeint sein, bei der die Strukturelemente bzw. Schichten in direktem Kontakt mit den Oberflächen der weiteren Schichten stehen, d.h. direkt auf den Oberflächen angeordnet sind. Alternativ kann damit auch eine solche Anordnung gemeint sein, bei der zwischen den Strukturelementen bzw. Schichten und den weiteren Schichten mindestens eine zusätzliche Schicht vorliegt. Erfindungsgemäß weisen die Strukturelemente unabhängig voneinander eine Breite von 500 bis 5000 µm auf und die Abstände zwischen benachbarten Strukturelementen betragen unabhängig voneinander 1000 bis 25000 µm.

Typischerweise stehen im erfindungsgemäßen Haftklebestreifen die Strukturelemente in direktem Kontakt mit der Haftklebemasseschicht, auf der sie angeordnet sind. Beispielsweise können die Strukturelemente auf die darunterliegende Oberfläche auflaminiert worden sein, woraus sich ein mehrschichtiger Aufbau ergibt. Alternativ können die Strukturelemente und die darunterliegende Haftklebemasseschicht durch gemeinsame Extrusion, d.h. Co-Extrusion, ausgeformt worden sein, woraus sich ebenfalls ein mehrschichtiger Aufbau ergibt. Bei der Co-Extrusion handelt es sich um ein additives Verfahren, d.h. die Strukturelemente werden auf der Grundschicht HK1 aufgebracht. Erfindungsgemäß besonders vorteilhaft ist es, wenn die Strukturelemente auf mindestens einer Oberfläche der Haftklebemasseschicht HK1 durch ein geeignetes Formgebungsverfahren geschaffen worden sind, so dass die Haftklebemasseschicht HK1 und die Strukturelemente zusammen einen einschichtigen Aufbau darstellen. Dabei handelt es sich um ein subtraktives Verfahren, d.h. es werden Vertiefungen erzeugt. Ein solcher Haftklebestreifen lässt sich zum Beispiel erzeugen, in dem die Haftklebemasse einer Extrusions- oder Hotmeltdüse zugeführt wird, wobei im Bereich der Düsenlippe im Austrittsspalt der Düse auf mindestens einer Seite ein Shim vorgesehen ist, der einen Teilbereich des Austrittsspalts verengt, so dass sich eine Haftklebemasseschicht ergibt, bei der mindestens eine Oberfläche ein oder mehrere haftklebrige Strukturelemente aufweist.

Eine entsprechende Änderung des Klebemasseauftrags orthogonal zur Verstreckungsrichtung, d.h. orthogonal zur Verklebungsebene, wird erfindungsgemäß insbesondere durch eine Dickenänderung eines einschichtigen aus einer Klebemasse bestehenden Klebebandes realisiert. Vorzugsweise stellen somit die Haftklebemasseschicht HK1 und die Strukturelemente, die mindestens eine Oberfläche der Haftklebemasseschicht HK1 aufweist, zusammen einen einschichtigen Aufbau dar. Ein derartiger Haftklebestreifen weist eine geringe strukturelle Komplexität auf. Es ist eine wirtschaftliche Herstellbarkeit möglich. Zudem besteht beim Einschichtaufbau kein Risiko einer Delamination beim Ablösen des Haftklebestreifens durch dehnendes Verstrecken.

Ein erfindungsgemäßes Klebeband ist z. B. derart aufgebaut, dass in der Verklebungsebene, orthogonal zur Richtung, in der das dehnende Verstrecken des Klebebandstreifens erfolgt, die Klebebanddicke variiert, insbesondere regelmäßig, z. B. in Abständen von je 1 mm, zwischen z. B. 250 µm und 100 µm Dicke. Entsprechende Klebebandstreifen lassen sich überraschenderweise auch in großer Breite rückstands- und zerstörungsfrei aus Klebfugen sehr gut herauslösen. Die erfindungsgemäßen Haftklebestreifen eignen sich somit auch zum großflächigen Verkleben. Ferner können die erfindungsgemäßen Haftklebestreifen eine Keilform aufweisen. Sie können jedoch auch andere Formen aufweisen, wie zum Beispiel eine rechteckige Form. Die Keilform ist somit für das erfindungsgemäße Haftklebestreifendesign nicht zwingend erforderlich.

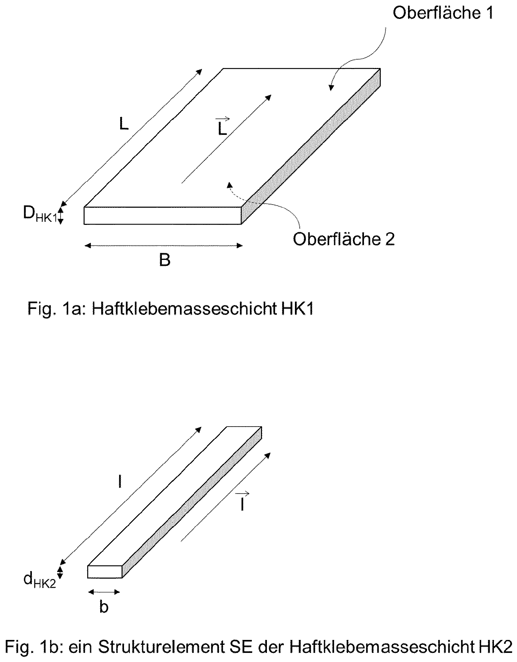

Gelöst wurde die Aufgabe also insbesondere durch ein Selbstklebeprodukt, das aus zumindest einem Element einer im Wesentlichen durchgängigen Haftklebemasseschicht HK1 mit einer Oberfläche 1 und einer gegenüberliegenden Oberfläche 2 besteht (Fig. 1a), und eine Breite B, eine Länge L und eine Schichtdicke D_{HK1} aufweist,
und bei der der Oberfläche 1 zumindest eine Schar an haftklebrigen Strukturelementen SE (Fig. 1b) zugeordnet ist.

Vorzugsweise lässt sich der Haftklebestreifen nicht lediglich beim Abziehen in der Verklebungsebene, sondern auch beim Abziehen in einem Winkel von mehr als 30° gegenüber der Verklebungsebene, wie zum Beispiel mindestens 90° gegenüber der Verklebungsebene, rückstands- und zerstörungsfrei wieder ablösen. Derartige Haftklebestreifen können beispielweise zur Verklebung von Mobilgeräten wie z.B. Mobiltelefonen verwendet werden. Insbesondere dort besteht beim Abziehen der stripfähigen Haftklebebänder immer weniger Platz, so dass Bedarf besteht an stripfähigen Haftklebebändern, die auch in einem solchen Winkel abgezogen werden können, ohne zu reißen. Als Beispiel wird die Verwendung solcher stripfähigen Haftklebebänder beim Battery Mounting genannt.

Die Schar an haftklebrigen Strukturelementen kann auch als unterbrochene (nicht durchgängige) Haftklebemasseschicht HK2 aufgefasst werden. Haftklebemasseschicht HK2 stellt daher im eigentlichen Sinne keine vollständige Schicht dar, sondern ein Ensemble von haftklebrigen Strukturelementen SE, die insbesondere streifenförmig ausgeführt sind.

Damit sich Haftklebestreifen durch dehnendes Verstrecken im Wesentlichen in der Verklebungsebene rückstands- und zerstörungsfrei wieder ablösen lassen, müssen sie bestimmte klebtechnische Eigenschaften besitzen. So muss beim Verstrecken die Klebrigkeit der Haftklebestreifen deutlich sinken. Je niedriger die Klebleistung im verstreckten Zustand ist, umso weniger stark wird der Untergrund beim Ablösen beschädigt oder umso weniger ausgeprägt besteht die Gefahr, dass Rückstände auf dem Verklebungssubstrat zurückbleiben. Besonders deutlich ist diese Eigenschaft bei Haftklebemassen auf Basis von Vinylaromatenblockcopolymeren zu erkennen, bei denen in der Nähe der Streckgrenze die Klebrigkeit auf unter 10 % sinkt.

Damit Haftklebestreifen durch dehnendes Verstrecken im Wesentlichen in der Verklebungsebene leicht und rückstandsfrei wieder abgelöst werden können, müssen sie neben den oben beschriebenen klebtechnischen auch bestimmte mechanische Eigenschaften besitzen. Besonders vorteilhaft ist ein Verhältnis von Reißkraft zu Strippkraft größer als zwei, bevorzugt größer als drei. Dabei ist die Strippkraft diejenige Kraft, die aufgewendet werden muss, um einen Haftklebestreifen aus einer Klebfuge durch dehnendes Verstrecken wiederabzulösen. Diese Strippkraft setzt sich aus der Kraft, die wie oben beschrieben für das Ablösen des Haftklebestreifens von den Verklebungsuntergründen nötig ist, und der Kraft, die zur Verformung des Haftklebestreifens aufgewendet werden muss, zusammen. Die zur Verformung des Haftklebestreifens erforderliche Kraft ist abhängig von der Dicke des Haftklebestreifens. Die zum Ablösen benötigte Kraft ist dagegen in dem betrachteten Dickenbereich des Haftklebestreifens (20 bis 2000 µm) unabhängig von der Dicke des Haftklebestreifens.

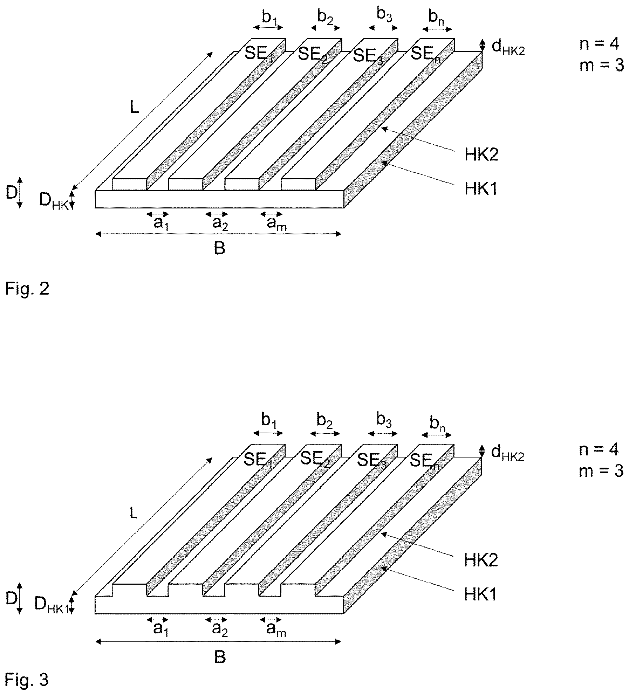

Fig. 2 zeigt eine vorteilhafte Ausführungsform bestehend aus einer Haftklebemasseschicht HK1, auf die eine Schar an haftklebrigen Strukturelementen einer nicht durchgängigen Haftklebemasseschicht HK2 beschichtet wurde. Haftklebemasse HK1 und Haftklebemasse HK2 können in ihrer Zusammensetzung verschieden oder gleich sein. Im Sinne der Anmeldung handelt es sich dabei sowohl bei verschiedener, als auch bei gleicher Zusammensetzung um einen zweischichtigen, d.h. mehrschichtigen, Aufbau. Der Aufbau aus Fig. 2 kann sich alternativ auch aus einer Coextrusion ergeben, bei der Haftklebemasseschicht HK1 und Haftklebemasseschicht HK2 in situ im Beschichtungsschritt erzeugt werden (Additivverfahren). Auch hier können Haftklebemasse HK1 und Haftklebemasse HK2 in ihrer Zusammensetzung verschieden oder gleich sein, wobei sich jeweils ein zweischichtiger, d.h. mehrschichtige, Aufbau ergibt.

Fig. 3 zeigt eine besonders bevorzugte Ausführungsform eines Haftklebestreifens. Dabei sind aus ein und derselben Haftklebemasse die Strukturelemente auf mindestens einer Oberfläche der Haftklebemasseschicht HK1 durch ein geeignetes Formgebungsverfahren geschaffen worden, so dass die Haftklebemasseschicht HK1 und die Strukturelemente zusammen einen einschichtigen Aufbau darstellen (die Haftklebemasseschichten HK1 und HK2 stellen in diesem Fall zusammen eine einzige Schicht dar). Dabei handelt es sich um ein subtraktives Verfahren, d.h. es werden Vertiefungen erzeugt. Ein solcher Haftklebestreifen lässt sich zum Beispiel erzeugen, in dem die Haftklebemasse einer Extrusions- oder Hotmeltdüse zugeführt wird, wobei im Bereich der Düsenlippe im Austrittsspalt der Düse auf einer Seite ein Shim vorgesehen ist, der einen Teilbereich des Austrittsspalts verengt, so dass sich eine Haftklebemasseschicht ergibt, bei der die Oberfläche ein oder mehrere haftklebrige Strukturelemente aufweist. Diese Variante des Haftklebestreifens ist besonders einfach in der Herstellung, und es besteht kein Risiko einer Delamination beim Ablösen des Haftklebestreifens durch dehnendes Verstrecken.

Die Haftklebemasseschicht HK2 im erfindungsgemäßen Selbstklebeprodukt weist n Strukturelemente auf, die als Strukturelemente SE₁ ... SEₙ bezeichnet werden. Die Strukturelemente SE₁ ... SEₙ sind definiert durch eine Breite b₁ ... bₙ, eine Dicke d₁ ... dₙ und einen Abstand zwischen zwei benachbarten Strukturelementen a₁ ... aₘ. Sehr bevorzugt weisen alle Strukturelemente im Wesentlichen eine einheitliche Breite b und eine einheitliche Dicke d auf. Weiterhin sehr bevorzugt sind alle Abstände zwischen zwei benachbarten Strukturelementen a im Wesentlichen gleich.

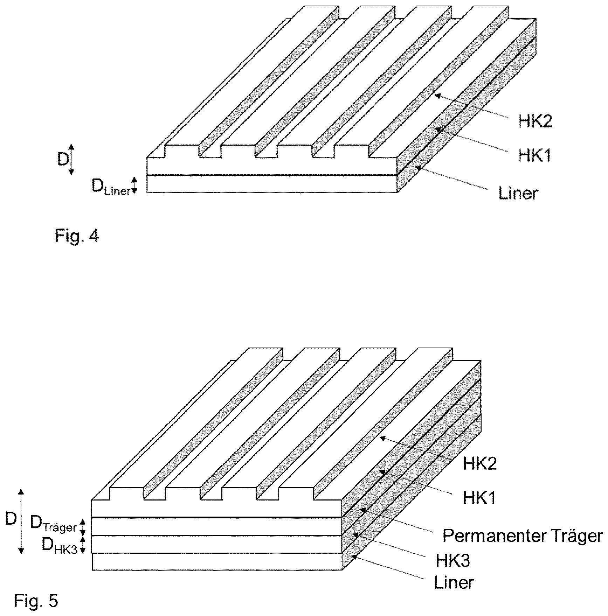

Fig. 4 zeigt die Gestaltungsform aus Fig. 3 in Kombination mit einer Lage eines temporären Trägers (Trennliners, d.h. Liners). Ein Liner (Trennpapier, Trennfolie) ist nicht Bestandteil eines Klebebandes bzw. Haftklebestreifens, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden.

Fig. 5 zeigt die Gestaltungsform aus Fig. 3, zu deren Oberfläche 2 eine Lage eines permanenten Trägers, d.h. einer permanenten Trägerschicht, zugeordnet ist. Auf der der Haftklebemasseschicht HK1 abgewandten Seite des permanenten Trägers ist eine weitere durchgängige Haftklebemasseschicht HK3 vorgesehen, die durch eine Lage eines temporären Trägers (Trennliner) abgedeckt ist. Haftklebemasseschicht HK3 kann sich in ihrer Zusammensetzung und/oder Dicke von Haftklebemasseschicht HK1 unterscheiden oder gleich sein. Abweichend von der Ausführungsform aus Fig. 5 kann der Oberfläche 2 zudem auch eine Haftklebemasseschicht HK3 zugeordnet sein, ohne dass sich zwischen Haftklebemasseschicht HK1 und Haftklebemasseschicht HK3 eine Schicht eines permanenten Trägers befindet (nicht gezeigt).

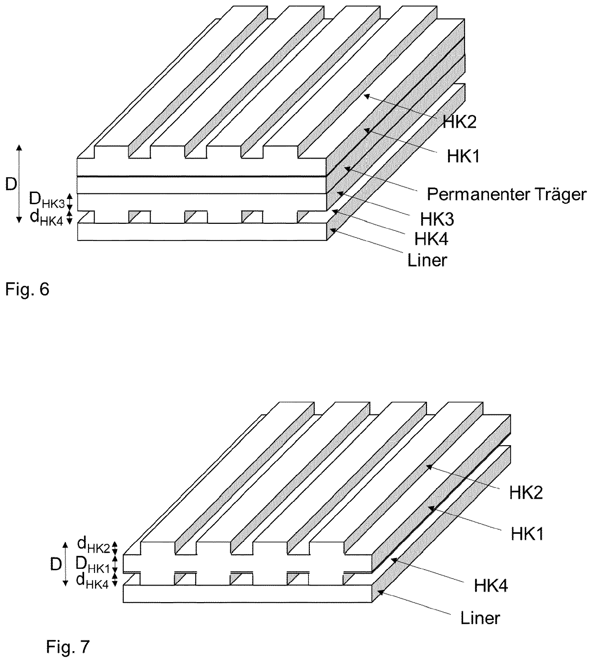

Fig. 6 zeigt ausgehend von Fig. 5 eine weitere Ausführungsform, bei der der Haftklebemasseschicht HK3 ihrerseits eine Schar an Strukturelementen einer nicht durchgängigen Haftklebemasseschicht HK4 zugeordnet sind. In Fig. 6 sind HK3 und HK4 durch ein subtraktives Verfahren hergestellt worden und stellen somit zusammen eine einzige Schicht dar. Die Ausgestaltung der nicht durchgängigen Haftklebemasseschichten HK2 und HK4 kann dabei gleich oder in einem oder mehreren Aspekten verschieden sein. Unabhängig voneinander können Haftklebemasse HK1 und Haftklebemasse HK2 einerseits bzw. Haftklebemasse HK3 und Haftklebemasse HK4 andererseits in ihrer Zusammensetzung verschieden oder gleich sein.

Fig. 7 zeigt eine weitere Ausführungsform, bei der im Vergleich zu der Ausführungsform aus Fig. 6 keine Lage eines permanenten Trägers vorgesehen ist. Die Haftklebemassen HK1, HK2 und HK4 sind gleich und bilden gemeinsam eine Schicht, der Haftklebestreifen aus Fig. 7 ist durch ein subtraktives Verfahren hergestellt worden.

Wir ein Haftklebestreifen aus Fig. 7 mittels Coextrusion oder Lamination hergestellt, so können die Haftklebemassen HK1, HK2 und HK4 gemäß der vorliegenden Erfindung aber auch verschieden sein. Beispielsweise kann die Zusammensetzung von jeweils zwei der Haftklebemasseschichten HK1, HK2 und HK4 gleich sein und von der jeweiligen dritten verschieden sein. Auch kann die Ausgestaltung der Haftklebemasseschichten HK2 und HK4 gleich oder in einem oder mehreren Aspekten verschieden sein (nicht gezeigt).

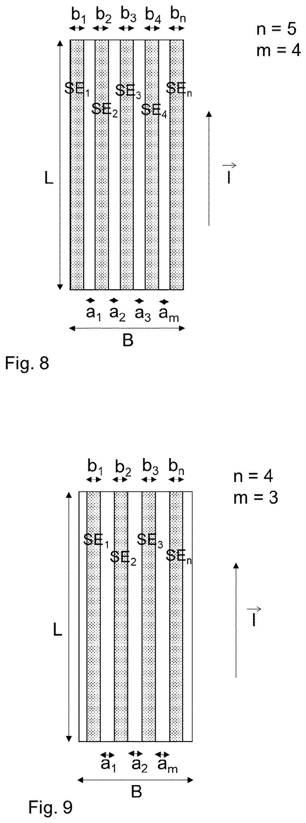

Die Strukturelemente SE weisen eine Länge l, auch Direktor l̅ genannt, auf, entlang derer sie innerhalb des Selbstklebeprodukts im Wesentlichen nicht unterbrochen sind. Der Direktor schließt mit dem Ausdehnungsvektor L̅ mit dem Betrag L einen Winkel von mindestens 0° und höchstens etwa 45°, bevorzugt höchstens etwa 30° ein. Sehr bevorzugt sind der Direktor und der Ausdehnungsvektor L̅ mit der Länge L kollinear (Fig. 8). Erfindungsgemäß erfolgt der Ablöseprozess durch dehnendes Verstrecken entlang der Länge des Klebestreifens.

Die linke Seite des Strukturelements SE₁ kann bündig ausgerichtet sein mit der linken Seite der Haftklebemasseschicht HK1. Die rechte Seite des Strukturelements SEₙ kann bündig ausgerichtet sein mit der rechten Seite der Haftklebemasseschicht HK1. Fig. 8 zeigt eine beispielhafte Ausführungsform, bei der SE₁ und SEₙ bündig mit der linken bzw. rechten Seite der Haftklebemasseschicht HK1 ausgerichtet sind. Fig. 9 zeigt eine beispielhafte Ausführungsform, bei der SE₁ und SEₙ nicht bündig mit der linken bzw. rechten Seite der Haftklebemasseschicht HK1 ausgerichtet sind.

Erfindungsgemäß können Strukturelemente regelmäßig oder unregelmäßig auf einer Haftklebemasseschicht angeordnet sein, wobei beispielsweise die Strukturelemente derart auf der Haftklebemasseschicht angeordnet sind, dass die entsprechende Oberfläche des Haftklebestreifens an die Oberflächenstruktur des zu verklebenden Substrats angepasst ist. In diesem Fall bestimmt das Substrat die Anordnung der Strukturelemente.

Erfindungsgemäß können die Strukturelemente außerdem eine wiederkehrende oder nicht wiederkehrende Verortung aufweisen.

Zudem können die Strukturelemente erfindungsgemäß durchgängig oder nicht durchgängig auf der Haftklebemasseschicht angeordnet sein, wobei die Strukturelemente beispielsweise Unterbrechungen aufweisen oder vor der Kante der Haftklebemasseschicht enden.

Erfindungsgemäß können außerdem die einzelnen Strukturelemente innerhalb der Anordnung auf der Haftklebemasseschicht eine Änderung der Breite und/oder der Dicke, vorzugsweise der Dicke, aufweisen, wobei sie vorzugsweise eine kontinuierliche Verringerung der Dicke, beispielsweise gegen null, zu einem Ende des Haftklebstreifens aufweisen, wobei es sich, falls der Haftklebstreifen einen Anfasser umfasst, um das dem Anfasser gegenüber liegende Ende des Haftklebestreifens handelt. Zur Verringerung eines Katapultierens im letzten Moment des Ablösevorganges durch Verstrecken wäre z.B. eine gezielte Verringerung der Schichtdicke eines Strukturelementes dienlich (Spannungsabbau durch aktive Verklebungsflächenreduzierung gegen 0 zum Ende des abzulösenden Klebstreifens am dem Anfasser entgegengesetzten Streifenende).

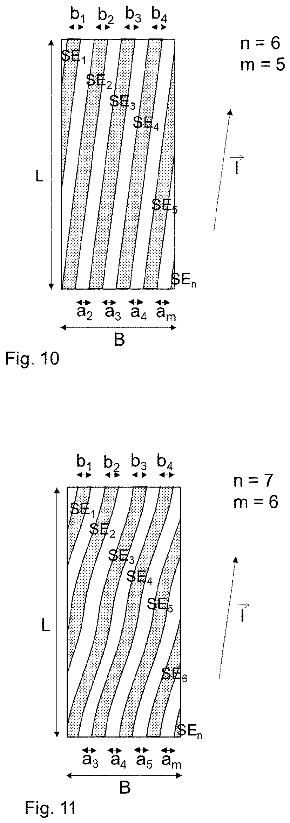

Fig. 10 zeigt beispielhaft eine Auslegungsform, bei der die nicht durchgehende Haftklebemasseschicht HK2 streifenförmige Strukturelemente umfasst, deren Direktor jedoch nicht mit dem Ausdehnungsvektor L̅ mit der Länge L kollinear ist.

Fig. 11 zeigt ein Beispiel für eine Auslegungsform, bei der die nicht durchgängige Haftklebemasseschicht HK2 in Form von streifenförmigen Strukturelementen mit wellenartigen Seitenkanten konzipiert ist. Im dargestellten Beispiel sind der Direktor und der Ausdehnungsvektor L̅ mit der Länge L nicht kollinear. Sie können jedoch auch kollinear sein.

Die streifenförmigen Strukturelemente können somit gerade sein oder aber an mindestens einer Stelle gekrümmt sein. Beispielsweise können sie zumindest in einem Teilbereich, gegebenenfalls vollständig, wellenförmig sein. Besonders bevorzugt sind sie gerade Ausführungsformen. Der gerade, gekrümmte bzw. wellenförmige Charakter der Strukturelemente bezieht sich dabei auf die Anordnung auf der Haftklebemasseschicht (x,y-Richtung), d.h. letztlich auf die Verklebungsebene.

*Bevorzugte Abmessungen des Haftklebestreifens und dessen Bestandteile, insbesondere für die sehr bevorzugte Erfindungsauslegung streifenförmiger Strukturelemente SE oder wellenförmiger mit parallel verlaufender Bogenform:*

| Parameter | beschreibt | Typischer erfindungsgemäßer Wertebereich | Bevorzugter Wertebereich |
|---|---|---|---|
| L | Länge des Haftklebestreifens in Richtung der vorgesehenen Ablöserichtung | 5 mm bis typischerweise nicht mehr als 300 mm | 20 mm bis 200 mm, sehr bevorzugt 50 mm bis 100 mm |
| B | Breite des Haftklebstreifens | 5 mm bis typischerweise 500 mm oder mehr | 20 mm bis 300 mm, sehr bevorzugt 50 mm bis 200 mm |
| D | Dicke des Haftklebestreifens, unter Berücksichtigung der Dicke der Strukturelemente und ohne temporäre Träger | 100 µm bis typischerweise nicht mehr als 2000 µm | 150 µm bis 1000 µm, sehr bevorzugt 200 bis 300 µm |
| aᵢ(HK2) | Erfindungsgemäßer Abstand zwischen benach-barten Strukturelementen SE_{HK2} | 1000 µm bis 25000 µm | 1500 µm bis 5000 µm sehr bevorzugt 2000 µm bis 3000 µm |
| bᵢ(HK2) | Erfindungsgemäße Breite des Strukturelements SEᵢ(HK2) | 500 µm bis 5000 µm | 1000 µm bis 3500 µm, sehr bevorzugt 1500 µm bis 2500 µm |
| aᵢ(HK4) | Abstand zwischen benachbarten Strukturelementen SE_{HK4} | 1000 µm bis 5000 µm | 1500 µm bis 3500 µm sehr bevorzugt 2000 µm bis 3000 µm |
| bᵢ(HK4) | Breite des Strukturelements SEᵢ(HK4) | 500 µm bis 5000 µm | 1000 µm bis 3500 µm, sehr bevorzugt 1500 µm bis 2500 µm |
| d_{HK2} | Dicke des Strukturelements HK2 | 15 µm bis 250 µm | 20 µm bis 200 µm, sehr bevorzugt 50 µm bis 150 µm |
| D_{HK1} | Dicke der Haftklebemasseschicht HK1 (wenn kein Permanentträger vorhanden) | 70 µm bis 1500 µm | 75 µm bis 800 µm, bevorzugter 80 bis 250 µm, sehr bevorzugt 100 µm bis 200 µm |
| D_{HK1} | Dicke der Haftklebemasseschicht HK1 (wenn Permanentträger vorhanden) | 15 µm bis 500 µm | 20 µm bis 250 µm, sehr bevorzugt 50 µm bis 150 µm |
| D_{Liner} | Dicke des temporären Trägers | 20 µm bis 200 µm | 30 µm bis 120 µm, bevorzugt 50 µm bis 100 µm |
| D_{Träger} | Dicke eines optionalen permanenten Trägers | 10 µm bis 200 µm | 20 µm bis 100 µm, sehr bevorzugt 30 µm bis 80 µm |
| D_{HK3} | Dicke einer optionalen Haftklebemasseschicht HK3 (wenn kein Permanentträger vorhanden) | 70 µm bis 1500 µm | 75 µm bis 800 µm, bevorzugter 80 µm bis 250 µm, sehr bevorzugt 100 bis 200 µm |
| D_{HK3} | Dicke einer optionalen Haftklebemasseschicht HK3 (wenn Permanentträger vorhanden) | 15 µm bis 500 µm | 20 µm bis 250 µm, sehr bevorzugt 50 µm bis 150 µm |
| d_{HK4} | Dicke eines optionalen Strukturelements HK4 | 15 µm bis 250 µm | 20 µm bis 200 µm, sehr bevorzugt 50 µm bis 150 µm |

Dem Fachmann ist offenkundig, dass die Gestalt der Strukturelemente der Haftklebemasseschicht HK2 und ggf. der Haftklebemasseschicht HK4 nicht als ideales Kastenprofil vorliegen. Abweichungen des idealen Kastenprofils liegen im Rahmen des erfinderischen Gedankens.

Erfindungsgemäße Selbstklebeprodukte zeigen sich u.a. vorteilhaft bei rückstands- und zerstörungsfreiem Wiederablösen unter dehnendem Verstrecken, wenn ihre Breite B größer ist als ihre Länge L. Entsprechend kann die Breite B auch geringer sein als die Länge oder in ihrer Ausprägung gleich.

Auch wenn sich diese Vorteile besonders bei Selbstklebeartikeln mit großer Breite B zeigen, so sind erfindungsgemäße Klebeprodukte natürlich auch bei geringeren Breiten B vorteilhaft einsetzbar.

In einer bevorzugten Ausführungsform weicht die Dicke der einzelnen Strukturelemente höchstens 20 %, vorzugsweise höchstens 10 %, voneinander ab und ist insbesondere identisch, und/oder die Breite der einzelnen Strukturelemente weicht höchstens 20 %, vorzugsweise höchstens 10 %, voneinander ab und ist insbesondere identisch. Derartige geringfügige Abweichungen stellen insbesondere übliche Toleranzabweichungen dar, die durch das Herstellungsverfahren des Haftklebstreifens bedingt sind.

In einer weiteren bevorzugten Ausführungsform weichen die einzelnen Abstände zwischen benachbarten Strukturelementen höchstens 20 %, vorzugsweise höchstens 10 %, voneinander ab und sind insbesondere identisch. Derartige geringfügige Abweichungen stellen insbesondere übliche Toleranzabweichungen dar, die durch das Herstellungsverfahren des Haftklebstreifens bedingt sind.

Wie vorstehend beschrieben, ist erfindungsgemäß die Dicke der Haftklebemasseschicht HK1, wenn kein Permanentträger vorhanden ist, typischerweise 70 µm bis 1500 µm, vorzugsweise 75 µm bis 800 µm, bevorzugter 80 bis 250 µm und sehr bevorzugt 100 µm bis 200 µm. Ist die Haftklebemasseschicht HK1 zu dünn, ist ein reißerfreies Ablösen allenfalls deutlich erschwert möglich. Ist die Haftklebemasseschicht HK1 zu dick, so sind die Kräfte, die zum Ablösen erforderlich sind, zu hoch, so dass ein reißerfreies Ablösen ebenfalls deutlich erschwert ist.

### Bevorzugt einsetzbare Klebemassen:

Die Haftklebemasseschicht(en) und Strukturelemente basieren, unabhängig voneinander, vorzugsweise auf Vinylaromatenblockcopolymer, Poly(meth)acrylat, Poly(meth)acrylat-blockcopolymer, Silikon, Nitrilkautschuk oder einer Mischung davon, insbesondere basieren sie auf Vinylaromatenblockcopolymer.

Besonders bevorzugt werden sie nach dem einschlägigen Stand der Technik auf Polyvinylaromat-Polydien-Blockcopolymer-Basis bzw. auf Basis voll- oder teilhydrierter Varianten dieser Blockcopolymere formuliert. Hierzu können beispielsweise US 4,024,312 A, DE 33 31 016 A1, DE 42 22 849 C1 und US 6,001,471 A konsultiert werden. Haftklebemassen dieser Art enthalten Klebharze und ggf. weitere Bestandteile.

Vorzugsweise enthalten die Vinylaromatenblockcopolymere Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem, wobei die B-Blöcke zumindest teilhydriert, wie beispielsweise vollhydriert, sein können.

In einer bevorzugten Ausführungsform wird als Vinylaromatenblockcopolymer mindestens ein Synthesekautschuk in Form eines Blockcopolymers mit einem Aufbau A-B, A-B-A, (AB)ₙ, (A-B)ₙX oder (A-B-A)ₙX eingesetzt, worin
- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und
- n für eine ganze Zahl ≥ 2 stehen.

Die Vinylaromaten zum Aufbau des Blocks A umfassen vorzugsweise Styrol, α-Methylstyrol und/oder andere Styrol-Derivate, besonders bevorzugt Styrol. Das Monomer für den Block B ist vorzugsweise ausgewählt aus der Gruppe bestehend aus Butadien, Isopren, Ethylbutadien, Phenylbutadien, Piperylen, Pentadien, Hexadien, Ethylhexadien und Dimethylbutadien sowie einer beliebigen Mischung dieser Monomere.

Bevorzugt beträgt der Anteil der Vinylaromatenblockcopolymere, wie insbesondere Styrolblockcopolymere, in Summe bezogen auf die Haftklebemasseschicht(en) und/oder bezogen auf die Strukturelemente mindestens 20 Gew.-%, vorzugsweise mindestens 30 Gew.-%, weiter bevorzugt mindestens 35 Gew.-% und gleichzeitig maximal 75 Gew.-%, bevorzugt maximal 65 Gew.-%, ganz besonders bevorzugt maximal 55 Gew. %.

Die Haftklebemassen HK2 bzw. ggf. HK4 können alternativ auf Basis von Poly(meth)acrylaten insbesondere nach WO 92/11332 A1, WO 92/11333 A1, WO 95/06691 A1 oder DE 195 31 696 A1 konzipiert sein. Der Begriff "Poly(meth)acrylat" umfasst dabei sowohl Polyacrylat, als auch Polymethacrylat. Haftklebemassen dieser Art enthalten optional Klebharze und ggf. weitere Bestandteile.

Die Haftklebemassen HK1 und HK2 bzw. ggf. HK3 und HK4 können zudem basierend auf Poly(meth)acrylat-Blockcopolymeren formuliert sein, zum Beispiel nach DE 101 29 608 A1. Haftklebemassen dieser Art enthalten optional Klebharze und ggf. weitere Bestandteile.

Die Haftklebemassen HK1 und HK2 bzw. ggf. fHK3 und HK4 können alternativ der Gruppe der Silikon-Haftklebemassen zum Beispiel nach WO 02/04571 A1 entnommen sein.

Die Haftklebemassen HK2 bzw. ggf. HK4 können Nitrilkautschuk-basierende Haftklebemassen insbesondere nach DE 10 2015 215 247 A1 sein. Haftklebemassen dieser Art enthalten Klebharze und ggf. weitere Bestandteile.

Auf Basis eines Polymers bzw. einer bestimmten Polymermasse in diesem Sinne bedeutet typischerweise, dass zu mindestens 50 Gew.-% bezogen auf den Gesamtanteil aller Elastomerkomponenten das besagte Polymer die Funktion der Elastomerkomponente übernimmt. Vorzugsweise ist das besagte Polymer alleinig als Elastomerkomponente vorgesehen. Das Basispolymer kann dabei auch eine Polymermischung sein. Das Basispolymer stellt außerdem vorzugsweise mindestens 50 Gew.-% der in der Klebemasse enthaltenen Polymere dar, es kann beispielweise auch das einzige Polymer der Klebemasse darstellen. Eventuell in der Klebemasse enthaltene Klebharze gelten in diesem Zusammenhang nicht als Polymere.

Die erfindungsgemäß eingesetzten Haftklebemassen enthalten häufig Klebharz, das gemäß den dem Fachmann geläufigen Verträglichkeitsüberlegungen für die zu tackifizierende Polymerbasis ausgewählt wird. Vorzugsweise ist in den Haftklebemasseschicht(en) und/oder Strukturelementen Klebharz in einer Menge von 20 bis 60 Gew.-% enthalten, insbesondere wenn die Haftklebemassen auf Basis von Vinylaromatenblockcopolymer sind.

Die Haftklebemassen für HK2 (bzw. ggf. HK4) können geschäumt sein. Hierzu bieten sich alle nach dem Stand der Technik bekannten Schäumungsmethoden und darüber erhaltenen Schaumarten an, seien sie syntaktisch oder nicht-syntaktisch. Sehr bevorzugt werden geschäumte Haftklebemassen durch Expansion von Mikroballons erzeugt, d.h. die Haftklebemassen sind insbesondere mit Mikroballons geschäumt. Zu diesem Zweck kann beispielsweise DE 10 2015 206 076 A1 zu Rate gezogen werden. Die Haftklebemassen HK1 bzw. ggf. HK3 können ebenfalls geschäumt sein, insbesondere wenn zumindest ein permanenter Träger im Produktaufbau vorgesehen ist.

Für HK2 (bzw. ggf. auch HK4) kommen vor allem Haftklebemassen zum Einsatz, die einen ausreichend geringen kalten Fluss aufweisen, so dass die Strukturierung sich unter Lagerbedingungen im Wesentlichen nicht verändert. Haftklebemassen basierend auf Polyvinylaromat-Polydien-Blockcopolymeren oder deren teil- oder vollhydrierten Varianten oder auf Polymethacrylat-Blockcopolymeren sind in diesem Zusammenhang sehr vorteilhaft einsetzbar und werden bevorzugt.

Im Sinne dieser Erfindung ist eine Erfindungsauslegung für Haftklebemasse HK1 und/oder HK3 vorgesehen, nach der sie typischerweise eine Zugfestigkeit von mindestens 6 MPa, vorzugsweise mindestens 8 MPa, noch bevorzugter von mindestens 10 MPa (Test A) aufweist. Diese Erfindungsauslegung erfährt insbesondere dann Relevanz, wenn im Selbstklebeprodukt keine weitere Permanentträgerschicht vorgesehen ist.

Die Zugfestigkeit der Haftklebemasse der Strukturelemente ist gegenüber der Zugfestigkeit der Haftklebemasse der Haftklebemasseschicht HK1 und, falls vorhanden, HK3 gleich oder verschieden, vorzugsweise gleich oder geringer.

Zudem ist in einem Haftklebstreifen mit permanentem Träger die Zugfestigkeit des permanenten Trägers mindestens so groß wie, vorzugsweise größer als die Zugfestigkeit der im Haftklebestreifen vorliegenden Haftklebemasse(n).

Insbesondere in der Ausführungsform nach Fig. 2 ist es sehr vorteilhaft für den Ablöseprozess des Selbstklebeprodukts durch dehnendes Verstrecken entlang der Länge L aus einem Verklebungsverbund, wenn die maximale Dehnbarkeit der Haftklebemasse in Haftklebemasseschicht HK1 mindestens so groß ist, bevorzugt größer als die maximale Dehnbarkeit der Haftklebemasse in den Strukturelementen der Haftklebemasseschicht HK2 ist. Sie kann aber auch geringer sein.

Kommen für die Haftklebemasseschichten HK1 und HK2 (bzw. ggf. für die Haftklebemasseschichten HK3 und HK4) Haftklebemassen zum Einsatz, die sich in ihrer Zusammensetzung unterscheiden, dann ist bei der Auswahl und Einsatzmenge von Inhaltsstoffen zu beachten, dass Migration von Inhaltsstoffen einer Haftklebemasseschicht in die benachbarte Haftklebemasseschicht verhindert werden sollte. Dies kann insbesondere dadurch realisiert werden, dass auf solche migrierfähigen Inhaltsstoffe verzichtet wird. Dies kann in einer weiteren Variante insbesondere dadurch realisiert werden, dass eine Schicht zwischen den benachbarten Schicht(en) vorgesehen ist, die gegenüber den migrierfähigen Inhaltsstoffen eine Sperrwirkung ausübt. Dies kann in einer weiteren Variante dadurch realisiert werden, dass migrierfähige Inhaltsstoffe in beiden benachbarten und ggf. weiteren Schichten so in ihrem Mengenanteil vorgesehen sind, dass auf Grund der eingestellten Mengenanteile und Verteilungskoeffizienten Migration größtmöglich unterdrückt wird.

### Weitere optional einsetzbare Schichten:

In Kombination mit der Haftklebemasseschicht HK1 und den Strukturelementen, die sie aufweist, können zur Einstellung der Handhabbarkeit eine oder mehrere Lagen eines oder verschiedener Trägermaterialien als permanenter Träger eingesetzt werden. Über eine permanente Trägerschicht lassen sich Produkteigenschaften wie beispielsweise einerseits Konfektionierbarkeit und Stanzbarkeit und andererseits das Ablöseverhalten durch dehnendes Verstrecken optimieren.

Bevorzugt wird auf einen permanenten Träger verzichtet, um den Herstellprozess so wenig komplex (z. B. im Hinblick auf die Anzahl an erforderlichen offline Beschichtungs- oder Kaschierschritten) und damit so wirtschaftlich wie möglich zu gestalten.

Kommt eine permanente Trägerschicht wie zum Beispiel ein Folienträger zum Einsatz, dann wird sie vorteilhaft so ausgewählt, dass Migration von Inhaltsstoffen der Trägerschicht in die benachbarten Schichten verhindert wird bzw. dass Migration von Inhaltsstoffen aus benachbarten Schichten in die permanente Trägerschicht verhindert wird. Dies kann insbesondere dadurch realisiert werden, dass auf solche migrierfähigen Inhaltsstoffe verzichtet wird. Dies kann in einer weiteren Variante insbesondere dadurch realisiert werden, dass eine Schicht zwischen der permanenten Trägerschicht und der benachbarten Schicht oder den benachbarten Schichten vorgesehen ist, die gegenüber den migrierfähigen Inhaltsstoffen eine Sperrwirkung ausübt. Dies kann in einer weiteren Variante dadurch realisiert werden, dass migrierfähige Inhaltsstoffe in beiden benachbarten und ggf. weiteren Schichten so in ihrem Mengenanteil vorgesehen sind, dass auf Grund der eingestellten Mengenanteile und Verteilungskoeffizienten Migration größtmöglich unterdrückt wird.

Geeignete Trägermaterialien sind zum Beispiel in WO 92/11333 A1, US 6,372,341 B1, DE 10 2012 223 670 A1 und EP 1 955 965 A1 aufgeführt.

Der permanente Träger weist vorzugsweise in der Längsrichtung und/oder der Querrichtung, insbesondere in der Längsrichtung und der Querrichtung, eine Reißdehnung von mindestens 250 % auf, bevorzugter von mindestens 300 %, noch bevorzugter von mindestens 400 % und insbesondere von mindestens 500 % wie zum Beispiel von mindestens 600 %. Als solche permanenten Träger können zum Beispiel sehr dehnfähige Folien dienen. Beispiele für vorteilhaft einsetzbare dehnbare Träger sind transparente Ausführungen aus WO 2011/124782 A1, DE 10 2012 223 670 A1, WO 2009/114683 A1, WO 2010/077541 A1 und WO 2010/078346 A1.

Zur Herstellung der Träger können filmbildende oder extrusionsfähige Polymere eingesetzt werden, die zusätzlich mono- oder biaxial orientiert sein können.

In einer bevorzugten Ausführung werden Polyurethane eingesetzt. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Beim Polyurethan handelt es sich vorzugsweise um ein Polyetherurethan oder ein Polyesterurethan.

Ferner lassen sich Polyolefine vorteilhaft als Ausgangsmaterialien für den dehnbaren Träger verwenden. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Zugfestigkeit.

Dem Fachmann sind weitere Rohstoffe bekannt, aus denen erfindungsgemäße Träger aufgebaut werden können. Weiterhin ist es vorteilhaft, Kautschuk basierende Materialien in Trägern einzusetzen, um die gewünschte Dehnbarkeit zu realisieren. Als Kautschuk oder Synthesekautschuk oder daraus erzeugten Verschnitten als Ausgangsmaterial für Träger kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden. Beim Träger kann es sich somit auch um ein thermoplastisches Elastomer handeln.

Besonders vorteilhaft einsetzbar als Materialien für dehnbare Träger sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[α]-Methylstyrol, Polyalkylvinylether, Polyvinylacetat, Polymerblöcke [α],[β]-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Insbesondere wenn im erfindungsgemäßen Haftklebestreifen die Selbstklebemasseschichten auf Basis von Vinylaromatenblockcopolymer wie Styrolblockcopolymer sind, ist der dehnbare Träger bevorzugt auf Basis von Polyvinylaromaten-Polydien-Blockcopolymer, insbesondere von Polyvinylaromaten-Polybutadien-Blockcopolymer, sowie typischerweise von Klebharz. Ein solcher Folienträger überzeugt vor allem durch eine geringe Strippkraft, die eine leichte Wiederablösbarkeit des Haftklebestreifens ermöglicht, sowie eine geringe Reißeranfälligkeit beim Wiederablösen des Haftklebestreifens.

Zur Herstellung eines Trägermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind als Träger bahnförmige Schaumstoffe (beispielsweise aus Polyethylen und Polyurethan) geeignet.

Die Träger können mehrschichtig ausgestaltet sein oder einschichtig. Vorzugsweise besteht der Träger nur aus einer einzigen Schicht.

Des Weiteren können die Träger Deckschichten aufweisen, beispielsweise Sperrschichten, die ein Eindringen von Komponenten aus der Klebemasse in den Träger oder umgekehrt unterbinden. Diese Deckschichten können auch Barriereeigenschaften haben, um so ein Durchdiffundieren von Wasserdampf und/oder Sauerstoff zu verhindern. Zur besseren Verankerung der Haftklebemasse(n) auf dem Träger kann der Träger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Trägers kann einer antiadhäsiven physikalischen Behandlung oder Beschichtung unterzogen sein.

Für Auslegungsformen nach Fig. 5 und Fig. 6 ist es sehr vorteilhaft für den Ablöseprozess des Selbstklebeprodukts durch dehnendes Verstrecken entlang der Länge L aus einem Verklebungsverbund, wenn die maximale Dehnbarkeit (nach Test A) der permanenten Trägerschicht mindestens so groß ist, bevorzugt größer als die maximale Dehnbarkeit (nach Test A) der Haftklebemasse in Haftklebemasseschicht HK1 und HK3 sowie in den Strukturelementen, die sie aufweisen. Die maximale Dehnbarkeit kann aber auch geringer sein.

Trennliner und Trennfolien kommen wie einschlägig vorbeschrieben zum Einsatz.

Die erfindungsgemäßen Haftklebestreifen können Anfasserbereiche, die zur Ober- und/ oder Unterseite des Klebestreifens nicht klebrig sind, enthalten. Dieser Bereich dient als Anfasser, an dem gezogen wird, um das dehnende Verstrecken, insbesondere in der Verklebungsebene zu erzielen, und ist daher bevorzugt auf beiden Seiten nicht haftklebrig ausgerüstet, insbesondere durch das Aufbringen von Schichten aus Metall, Kunststoff oder Papier. Der Anfasserbereich kann jedoch auch durch Bestrahlung, Bepuderung oder Neutralisation der Klebemasse erzeugt werden. Alternativ kann ein Lack oder ein Primer an den entsprechenden Stellen aufgetragen werden. Zudem kann die Oberfläche durch chemische Behandlung wie Ätzen verändert werden, um jeweils nichtklebende Zonen zu erzeugen.

### Beispielhafte Herstellprozesse:

Zur Herstellung erfindungsgemäßer Selbstklebeprodukte sind alle nach dem Stand der Technik bekannten Verfahren einsetzbar. Grundsätzlich wird zunächst die Formulierung für die Haftklebemasseschicht HK1 und die Formulierung für die Strukturelemente der Haftklebemasseschicht HK2 hergestellt. Die Haftklebemasse für HK1 kann der Haftklebemasse für HK2 gleichen. Kommt eine Haftklebemasse für HK3 zum Einsatz bzw. HK4 für Strukturelemente der Klebemasseschicht HK4, dann kann HK3 HK4 gleichen. HK2 kann HK4 gleichen, HK1 kann HK3 gleichen. HK1 kann HK4 gleichen. HK2 kann HK3 gleichen.

Die Haftklebemassen können in organischem Lösungsmittel oder in einem Gemisch organischer Lösemittel hergestellt werden. Dazu werden die Rohstoffe in einem handelsüblichen Kneter mit geeigneten Lösungsmitteln zu einer homogenen, fließfähigen Masse verarbeitet. Anschließend wird beispielweise die Haftklebemasseschicht HK 1 durch vollflächige Beschichtung eines geeigneten antiadhäsiv ausgerüsteten PET-Liner hergestellt; und die Strukturelemente der Haftklebemasseschicht HK2 werden beispielsweise hergestellt, indem ein antiadhäsiv ausgerüsteter PET- Liner durch Verwendung einer Schablone im Auftragswerk nur partiell ("Streifenstrich") beschichtet wird. Lösemittelbasierende Haftklebemassen werden nach der Beschichtung getrocknet und in gewünschter Weise zusammenkaschiert.

Erfindungsgemäß bevorzugt wird ein lösemittelfreier Herstellprozess.

Lösemittelfrei hergestellte Klebemassen (insbesondere HK1 und ggf. HK3) werden bevorzugt inline beschichtet. HK2 bzw. ggf. HK4 werden anschließend oder inline zukaschiert. Die Strukturelemente und die darunterliegende Haftklebemasseschicht können durch gemeinsame Extrusion, d.h. Co-Extrusion, ausgeformt werden, woraus sich ein mehrschichtiger Aufbau ergibt.

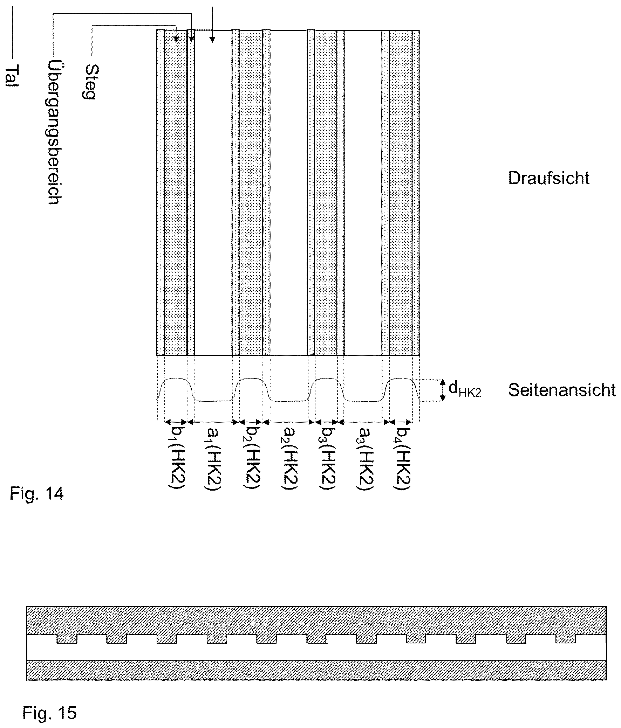

Ein Haftklebestreifen wird erfindungsgemäß besonders bevorzugt erzeugt, in dem eine Haftklebemasse einer Extrusions- oder Hotmeltdüse zugeführt wird, wobei im Bereich der Düsenlippe im Austrittsspalt der Düse auf zumindest einer Seite ein Shim, d.h. eine Abstandsscheibe, vorgesehen ist, der einen Teilbereich des Austrittsspalts verengt (Fig. 15). Siehe hierzu beispielsweise H. G. Lippert in Coatings Technology Handbook, A. A. Tracton (Hrsg.), 3. Aufl., CRC Taylor 8 Francis, Boca Raton, 2006, S. 19-14/15. Zudem offenbart DE 103 14 764 A1 ein Verfahren zur Herstellung von strukturierten Haftklebemassen, wobei die Haftklebemasse aus der Schmelze durch eine Düse beschichtet wird, durch die Düse strukturiert wird und anschließend mit actinischer Strahlung vernetzt wird.

Eine Alternative zu diesem Verfahren wird in EP 1961545 A1 beschrieben. Hier wird ein Verfahren zur Erzeugung von nano- und/oder mikrostrukturierten Oberflächen in einer klebenden, insbesondere selbstklebenden Schicht beschrieben, wobei eine klebende, insbesondere selbstklebende, Polymermischung in einen Spalt geführt wird, der von einer Reliefwalze, deren Oberfläche mit einem Relief versehen ist, das das Negativ der herzustellenden Oberflächenstruktur auf der klebenden Schicht darstellt, und einer Spaltwalze gebildet wird, wobei die Reliefwalze und die Spaltwalze gegenläufig rotieren, die Reliefwalze von einem bahnförmigen Trägermaterial zum Teil umschlungen ist, das durch den Spalt geführt wird und dessen Geschwindigkeit insbesondere der Umfangsgeschwindigkeit der Reliefwalze entspricht, und die klebende, insbesondere selbstklebende Polymermischung durch den Spalt durchgepresst wird, so dass die walzennahe Oberfläche der Polymermischung entsprechend dem Relief ausgeformt wird, nach dem Spaltdurchgang schichtförmig auf dem Trägermaterial aufliegt und mit diesem weggeführt wird.

Weiterhin einsetzbar sind Verfahren nach US 2002/0108564 A1 und darin zitierter Dokumente sowie US 6,803,076 A1 und US 4,106,437 A. Als weiteres strukturgebendes Verfahren eignet sich das Druckverfahren. Dieses eignet sich insbesondere zur Bedruckung bzw. Erzeugung von besonders anspruchsvollen Geometrien, welche nicht aus einer Düsengeometrie entspringen kann. Hier kommen somit Strukturelemente bzw. Strukturanteile hinzu. Denkbar ist außerdem ein (Heiß-)Prägeverfahren. Hier wird eine bereits vollständig massebeschichtete Bahn lediglich verformt, d.h. es kommen keine zusätzlichen Beschichtungsanteile hinzu (Ausnahme: man kombiniert eine Heißprägung sogleich mit einer bereits prägeform-analog vorgeformten zusätzlichen Schicht wie z.B. einer Haftklebemasseschicht, wobei Prägen und Kaschieren also kombiniert werden).

Dem Fachmann sind weitere Verfahren bekannt und er kennt vorteilhafte Einsatzmöglichkeiten, um erfindungsgemäße Selbstklebeprodukte herzustellen.

Über die Beschichtungs- und ggf. Kaschierprozesse, die vorzugsweise als Rolle-zu-Rolle-Verfahren ausgeführt werden, resultiert typischerweise zunächst Ballenware. Diese kann dann zu Rollen mit geringerer Bahnbreite zugeschnitten werden. Ballen oder Rollen werden dann einem Konfektionierprozess zugeführt, in dem Selbstklebefolien oder selbstklebende Stanzlinge erzeugt werden, die dann schließlich in der Verklebung von Zielverbünden zum Einsatz kommen.

Die bevorzugten Ausführungsformen des erfindungsgemäßen Haftklebestreifens gelten auch für die erfindungsgemäßen Verfahren. Weitere bevorzugte Ausführungsformen zu den Verfahren befinden sich in den abhängigen Ansprüchen.

### Beispielhafte Konfektionierformen:

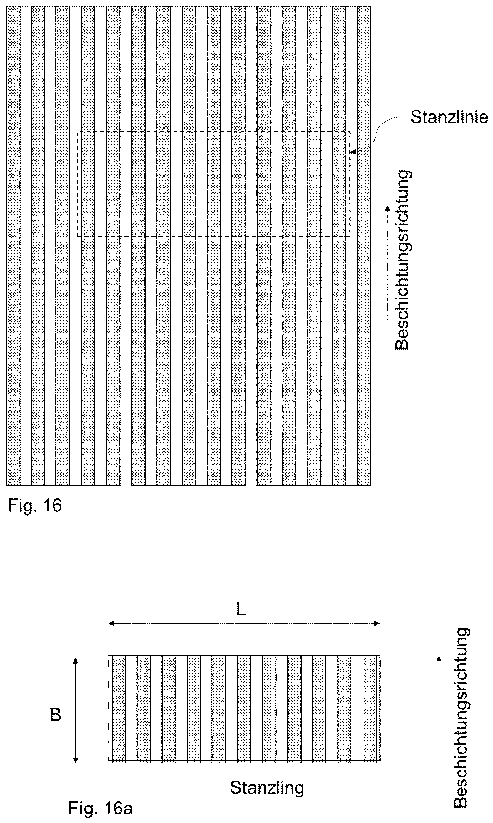

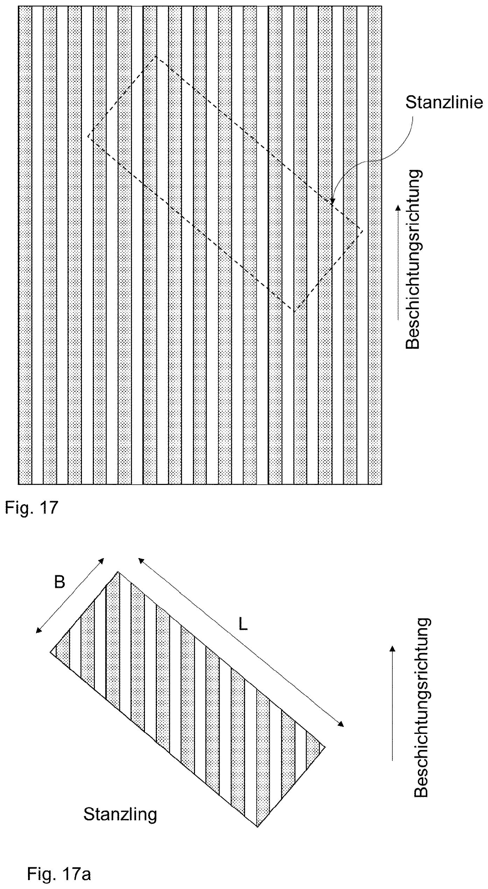

Die erfindungsgemäßen Selbstklebeprodukte kommen bevorzugt in Form von Selbstklebefolien oder selbstklebenden Stanzlingen zur Anwendung. Sie sind in diesen Fällen also in zwei Dimensionen zugeschnitten. Dies kann durch Schneiden oder Stanzen eines größerformatigen Vorprodukts, das insbesondere in Rollenform vorliegt, erfolgen. Über diesen dem Beschichtungs- und ggf. Laminierprozess für die Herstellung von Ballen-/Rollenware nachgeschalteten Konfektionierprozess, insbesondere Stanzprozess, eröffnet sich eine hohe Variabilität der Ausrichtung der Strukturelemente in Bezug auf die Richtung des Ablösens unter dehnender Verstreckung (siehe Fig. 16, 16a, 17, 17a).

Typische Konfektionierformen der erfindungsgemäßen Haftklebestreifen sind somit Klebebandrollen sowie Klebestreifen, wie sie zum Beispiel in Form von Stanzlingen erhalten werden. Vorzugsweise weisen alle durchgehenden Schichten im Wesentlichen die Form eines Quaders auf. Weiter vorzugsweise sind alle durchgehenden Schichten vollflächig miteinander verbunden. Optional kann ein nicht haftklebriger Anfasserbereich vorgesehen sein, von welchem aus der Ablöseprozess ausgeführt werden kann.

### Beispielhafte Anwendungen:

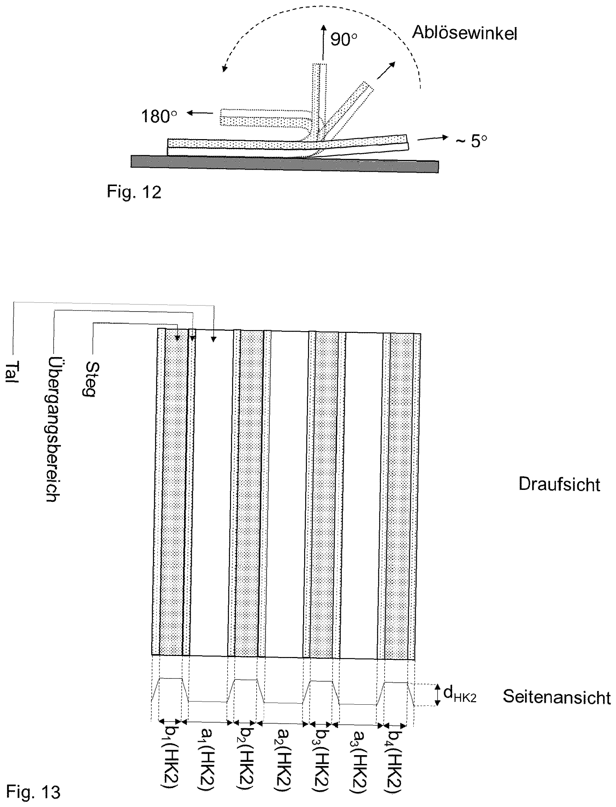

Erfindungsgemäße Selbstklebeprodukte eignen sich überraschend gut für die Verklebung von Bauteilen und zwar vor allem in Anwendungen, bei denen neben einer anwendungsgerechten Verklebungsfestigkeit ein rückstandsfreies und zerstörungsfreies Wiederablösen gefordert wird. Bei den erfindungsgemäßen Selbstklebeprodukten kann dieses Wiederablösen durch dehnendes Verstrecken im Wesentlichen entlang der Verklebungsrichtung erfolgen. Der Ablösewinkel kann entsprechend bei 0° oder ungefähr 5° aber auch bei Winkeln unterhalb etwas 30° gewählt sein. In manchen Anwendungen ist sogar ein Winkel größer als 30° erforderlich (Fig. 12). Sehr vorteilhaft sind erfindungsgemäße Selbstklebeprodukte in Ausgestaltungsformen mit hoher Breite B, da hier die rückstandsfreie Wiederablösbarkeit besonders anspruchsvoll ist. Ein Ablösen unter dehnendem Verstrecken kann auch unter Zuhilfenahme von Hilfsmitteln erfolgen wie zum Beispiel einer Vorrichtung nach DE 10 2014 208 263 A1 oder DE 10 2014 208 264 A1. Das Ablösen kann dabei bereits kurz nach Herstellung der Verklebungsverbunds wie z. B. innerhalb weniger Minuten erfolgen, wenn z. B. erkannt wurde, dass die Verklebung nicht anforderungsgerecht passgenau war und daher nochmal gelöst werden muss (die Bauteile können dann für eine erneute Verklebung wiederverwendet werden und brauchen nicht verworfen werden) oder nach einigen Stunden, wenn z. B. erkannt wurde, dass eines der verklebten Bauteile fehlerhaft ist (der Verbund kann dann gelöst werden zumindest eines der Bauteile kann wiederverwendet werden) oder mitunter sogar nach dem Lebenszyklus des Verklebungsverbunds, wenn einzelne Teile dem Recycling zugeführt werden sollen.

Erfindungsgemäße Haftklebestreifen können zum Beispiel zur Verklebung von Energiespeichermedien verwendet werden. Ein Beispiel ist die Verklebung von Batterieelementen wie in US 2017/361570 beschrieben. Batterieelemente können beispielsweise Akkus sein. Die Haftklebestreifen können auch zur Verklebung von Brennstoffzellen verwendet werden wie in internem Stand der Technik in DE 10 2017 206 083 beschrieben.

Außerdem können die erfindungsgemäßen Haftklebestreifen zur Verklebung von Consumerelektronikgeräten verwendet werden.

Zu den Consumerelektronikgeräten zählen elektronische, optische und feinmechanische Geräte, im Sinne dieser Anmeldung insbesondere solche Geräte, wie sie in Klasse 9 der Internationalen Klassifikation von Waren und Dienstleistungen für die Eintragung von Marken (Klassifikation von Nizza), 10. Ausgabe (NCL(10-2013)), einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere
- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen;
- Akustische Aufzeichnungs-, Verarbeitungs-, -übertragungs- und -wiedergabegeräte, wie beispielsweise Rundfunkgeräte und dergleichen;
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte;
- Fernkommunikations- und Multifunktionsgeräte mit Fernkommunikationsfunktion, wie beispielweise Telefone, Anrufbeantworter;
- Chemische und physikalische Messgeräte, Steuergeräte und Instrumente, wie beispielweise Akkumulatorladegeräte, Multimeter, Lampen, Tachometer;
- Nautische Geräte und Instrumente;
- Optische Geräte und Instrumente;
- Medizinische Geräte und Instrumente und solche für Sportler;
- Uhren und Chronometer;
- Solarzellenmodule, wie etwa elektrochemische Farbstoff-Solarzellen, organische Solarzellen, Dünnschichtzellen;
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Erfindungsgemäße Halfklebestreifen können daher insbesondere zur Verklebung von Mobilgeräten eingesetzt werden.

Nachfolgend sind einige portable Geräte aufgeführt, ohne sich durch die konkret genannten Vertreter in dieser Liste bezüglich des Gegenstands der Erfindung unnötig beschränken zu wollen.
- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras;
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");
- Monitore, Displays, Bildschirme, berührungsempfindliche Bildschirme (Sensorbildschirme, "Touchscreen-Geräte"), Beamer;
- Lesegeräte für elektronische Bücher ("E-Books");
- Kleinfernsehgeräte, Taschenfernseher, Filmabspielgeräte, Videoabspielgeräte;
- Radios (auch Klein- und Taschenrundfunkgeräte), Walkmen, Discmen, Musikabspielgeräte für z.B. CD, DVD, Blueray, Kassetten, USB, MP3, Kopfhörer;
- Schnurlose Telefone, Mobiltelefone, Smartphones, Funksprechgeräte, Freisprechgeräte, Personenrufgeräte (Pager, Pieper);
- Mobile Defibrilatoren, Blutzuckermessgeräte, Blutdruckmessgeräte, Schrittzähler, Pulsmesser;
- Taschenlampen, Laserpointer;
- Mobile Detektoren, optische Vergrößerungsgeräte, Fernsichtgeräte, Nachtsichtgeräte;
- GPS-Geräte, Navigationsgeräte, tragbare Schnittstellengeräte der Satellitenkommunikation;
- Datenspeichergeräte (USB-Sticks, externe Festplatten, Speicherkarten);
- Armbanduhren, Digitaluhren, Taschenuhren, Kettenuhren, Stoppuhren.

Des Weiteren bieten sich erfindungsgemäße Halfklebestreifen zur wiederablösbaren Befestigung von Schildern und Anzeigetafeln an wie z. B. im Transportbereich, an Automobilen, an Gebäuden und im Bereich der Stadtmöblierung. Weiterhin sind Anwendungen im Bereich der Druckindustrie denkbar. Hier können Aufgaben zur Verklebung von Druckklischees auf Druckzylindern bedient werden (WO 2014/032905). Auch für den Heimwerker und im Haushalt und Bürobereich sind erfindungsgemäße Halfklebestreifen vorteilhaft einsetzbar. So eignen sich erfindungsgemäße Haftklebestreifen u.a. für die rückstands- und zerstörungsfrei wieder ablösbare Fixierung typischerweise leichter bis mittelschwerer Gegenstände im Haushalt und im Bürobereich.

### Prüfmethoden:

### Test A - Zugfestigkeit, maximale Dehnbarkeit

Soll eine Haftklebemasse untersucht werden, so wird aus einem Muster in Form einer entsprechenden Haftklebemasseschicht mit einer Dicke von 750 µm ein Prüfmuster in Hantelform (Prüfstab 5A nach DIN EN ISO 527-1: 2012) ausgestanzt. Soll ein Träger untersucht werden, so wird aus dem Träger ein Prüfmuster in Hantelform (Prüfstab 5A nach DIN EN ISO 527-1: 2012) ausgestanzt. Das Prüfmuster wird bei 23 °C und 50 % rel. Luftfeuchtigkeit äquilibriert. An den beiden Endstücken wird das Prüfmuster in eine Zugprüfmaschine eingespannt. Mit einer Geschwindigkeit von 300 mm/min wird das Prüfmuster gedehnt und dabei die Kraft aufgenommen. Die Zugfestigkeit ist diejenige Kraft, bezogen auf die Querschnittsfläche des Musterns (Stegbreite x Schichtdicke), die bei der Bruchdehnung (maximale Dehnbarkeit) aufgezeichnet wird. Sie wird in MPa angegeben. Die maximale Dehnbarkeit wird in % angegeben.

### Test B - Abmessungen der Strukturelemente SE

Die Dimension der Steghöhe, d.h. Dicke der Strukturelemente, wird mittels Weißlichtinterferometrie mit einem Bruker Kontur GT Weißlichtinterferometer bestimmt. Es wird ein 5-fach Interferometerobjektiv genutzt bei einfacher Vergrößerungsoptik. Die Steghöhe wird grafisch bestimmt, indem die Differenz gebildet wird zwischen dem Maximalwert im Querschnitt eines Stegs und dem Minimalwert des Bereichs zwischen zwei benachbarten Stegen. Für die Auswertung werden drei Stege (Strukturelemente) untersucht und jeweils eine Doppelbestimmung für die Steghöhe durchgeführt. Der Ergebniswert ist das arithmetische Mittel dieser sechs Einzelwerte (falls weniger als drei Strukturelemente vorlagen, wird für die entsprechende Anzahl an Strukturelementen jeweils eine Doppelbestimmung durchgeführt). Fig. 13 zeigt schematisch die Vorgehensweise zur Bestimmung der Abmessungen der Strukturelemente die Haftklebemasseschicht HK2 aus dem optisch ermittelten Höhenprofil der Muster. Fig. 14 zeigt schematisch eine etwas realitätsnähere Darstellung eines beispielhaften Strukturprofils.

Die Dimensionen der Stegbreite und der Abstände zwischen benachbarten Stegen erfolgt mittels Lichtmikroskopie. Als Messoptik wird ein Leica DM4000B-M eingesetzt und als Bildsensor ein Leica DMC2900. Durch Stitching und Stacking einzelner Bildelemente wird ein Messbereich von etwa 9 mm in der Breite und 7 mm in der Länge erzeugt und analysiert. In der Realität weicht die Form der Strukturelemente von einem idealen Kastenprofil ab. Es existiert vielmehr ein Übergangsbereich charakterisiert durch eine Flanke, die als S-Kurve ausgebildet sein kann (Fig. 14). Der Übergangsbereich wird dem Abstand zwischen zwei benachbarten Stegen zugeschlagen. Für die Auswertung werden drei Stege bzw. drei Abstände zwischen benachbarten Stegen untersucht und jeweils eine Doppelbestimmung für die Stegbreite bzw. den Abstand zwischen benachbarten Stegen durchgeführt. Der Ergebniswert ist das arithmetische Mittel der jeweils sechs Einzelwerte (falls weniger als drei Strukturelemente bzw. Abstände zwischen Strukturelementen vorliegen, wird für die entsprechende Anzahl an Strukturelementen bzw. Abständen jeweils eine Doppelbestimmung durchgeführt).

In analoger Weise wie hinsichtlich der Strukturelemente einer Haftklebemasseschicht HK2 würde auch für Strukturelemente einer Haftklebemasseschicht HK4 einer hier nicht dargestellten Auslegung vorgegangen werden. Im Einzelnen werden die Parameter d_{HK2}, bᵢ(HK2) und aᵢ(HK2) folgendermaßen bestimmt:

| | |
|---|---|
| d_{HK2}: | Differenz zwischen höchstem Punkt des Stegs und tiefstem Punkt des Tals |
| bᵢ(HK2): | Breite des Stegs (eines Strukturelements i in HK2) exkl. Ausdehnung des Übergangsbereichs auf beiden Seiten des Stegs |
| aᵢ(HK2): | Abstand zwischen zwei benachbarten Stegen inkl. der Übergangsbereiche |

### Test C - Dicke

Die Dicke z.B. einer Klebemasseschicht oder einer Trägerschicht (d.h. eines Trägers) lässt sich über handelsübliche Dickenmessgeräte (Taster-Prüfgeräte) mit Genauigkeiten von weniger als 1 µm Abweichung ermitteln. Die Dicke einer Klebemasseschicht wird dabei typischerweise durch Bestimmung der Dicke eines bezüglich seiner Länge und seiner Breite definierten Abschnitts einer solchen auf einen Träger oder Liner aufgetragenen Schicht, abzüglich der (bekannten oder separat ermittelbaren) Dicke eines Abschnitts gleicher Dimensionen des verwendeten Trägers bzw. Liners ermittelt. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen. In der vorliegenden Anmeldung wird zur Dickenmessung das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen.

### Test D - Reißdehnung

Die Reißdehnung eines Trägers wird in Anlehnung an DIN EN ISO 527-3 unter Verwendung eines Probestreifens des Trägers, Probekörper Typ 2, mit einer Breite von 20 mm bei einer Separationsgeschwindigkeit von 100 mm pro Minute gemessen. Der Anfangsabstand der Einspannklemmen beträgt 100 mm. Das Prüfklima beträgt 23 °C und 50 % rel. Luftfeuchtigkeit.

### Test E - Erweichungspunkt T_{E}

Die Angaben zum Erweichungspunkt T_{E}, auch Erweichungstemperatur genannt, von oligomeren Verbindungen, polymeren Verbindungen bzw. Harzen beziehen sich auf das Ring-Kugel-Verfahren gemäß DIN EN 1427:2007 bei entsprechender Anwendung der Bestimmungen (Untersuchung der Oligomer- Polymer- bzw. Harzprobe statt Bitumens bei ansonsten beibehaltener Verfahrensführung); die Messungen erfolgen im Glycerolbad.

### Beispiele:

Die Rohstoffe sind wie folgt charakterisiert:
- Kraton D 1152 ES: Polystyrol-Polybutadien-Blockcopolymer der Firma Kraton Polymers.
- Dercolyte A115: α-Pinen-Klebharz der Firma DRT.
- Irganox 1010: Pentaerythritoltetrakis(3-(3,5-di-tert-butyl-4-hydroxyphenyl)propionat) der Firma BASF SE.
- Irgafos 168: Tris(2,4-di-tert-butylphenyl)phosphit der Firma BASF SE.

### Beispiel 1:

50,0 Gew.-% Kraton D1152, 49,0 Gew.-% Dercolyte A115, 0,5 Gew.-% Irganox 1010 und 0,5 % Irgafos 168 wurden in einem Doppelschneckenextruder compoundiert und inline einer Extrusionsdüse zugeführt. Der Austrittsspalt der Extrusionsdüse war mit einem Shim 1 so modifiziert, dass ein Teil der ausgeformten Schmelze (HK1) durchgängig war und ein Teil der Schmelze aus einer Serie von Strukturelementen (HK2) bestand. HK1 wurde mittels ihrer unteren Seite auf einem beidseitig silikonisierten Trennpapier abgelegt, das über eine Kühlwalze geführt wurde.

Es resultierte Rollenmaterial mit einer durchgängigen Haftklebemasseschicht HK1 und Strukturelementen HK2. Ergebnisse der Bestimmung der Abmessungen der einzelnen Elemente sind in Tabelle 1 zusammengefasst.

Aus dem auf diese Weise erhaltenen Rollenmaterial wurden Haftklebefolien herausgeschnitten mit einer Länge von 40 mm und einer Breite von 60 mm. Die Strukturelemente waren parallel zur Länge der Selbstklebefolie ausgerichtet. Das so erzeugte Selbstklebefolienmuster wurde mit einer Gummiwalze manuell auf eine Polyesterplatte laminiert, so dass die Folie den Rand der Polyesterplatte um etwa 10 mm überragte. Dieser Teil wurde mit passend zurechtgeschnittenen Polyesterfolienabschnitten als Anfasser gestaltet. Die strukturierte Seite des Haftklebefolienmusters zeigte zu der Polyesterplatte. Anschließend wurde der Trennliner ausgedeckt und auf der offenen Haftklebeoberfläche eine weitere Polyesterplatte zulaminiert. Auch diese Platte wurde mittels einer Gummiwalze manuell angedrückt. Der Verbund wurde für 2 h bei 23 °C und 50 % rel. Luftfeuchte äquilibriert.

Anschließend wurde ein manueller Ablöseversuch unternommen, indem an dem Anfasser in Richtung der Verklebungsebene und in Verlängerung der Strukturelemente verstreckt wurde. Die Selbstklebefolie ließ sich erfolgreich aus dem Klebeverbund lösen, ohne sichtbare Rückstände zurückzulassen. Zudem zeigte ein manueller Test des Verbunds eine hohe Verklebungsfestigkeit. So konnte der Klebeverbund beim Spreiten nicht ohne weiteres auseinandergenommen werden.

### Beispiel 2:

50,0 Gew.-% Kraton D1152 ES, 49,0 Gew.-% Dercolyte A115, 0,5 Gew.-% Irganox 1010 und 0,5 % Irgafos 168 wurden in einem Doppelschneckenextruder compoundiert und inline einer Extrusionsdüse zugeführt. Der Austrittsspalt der Extrusionsdüse war mit einem Shim 2 so modifiziert, dass ein Teil der ausgeformten Schmelze (HK1) durchgängig war und ein Teil der Schmelze aus einer Serie von Strukturelementen (HK2) bestand. HK1 wurde mittels ihrer unteren Seite auf einem beidseitig silikonisierten Trennpapier abgelegt, das über eine Kühlwalze geführt wurde.

Es resultierte Rollenmaterial mit einer durchgängigen Haftklebemasseschicht HK1 und Strukturelementen HK2. Ergebnisse der Bestimmung der Abmessungen der einzelnen Elemente sind in Tabelle 1 zusammengefasst.

Aus dem auf diese Weise erhaltenen Rollenmaterial wurden Haftklebefolien herausgeschnitten mit einer Länge von 40 mm und einer Breite von 60 mm. Die Strukturelemente waren parallel zur Länge der Selbstklebefolie ausgerichtet. Das so erzeugte Selbstklebefolienmuster wurde mit einer Gummiwalze manuell auf eine Polyesterplatte laminiert, so dass die Folie den Rand der Polyesterplatte um etwa 10 mm überragte. Dieser Teil wurde mit passend zurechtgeschnittenen Polyesterfolienabschnitten als Anfasser gestaltet. Die strukturierte Seite des Haftklebefolienmusters zeigte zu der Polyesterplatte. Anschließend wurde der Trennliner ausgedeckt und auf der offenen Haftklebeoberfläche eine weitere Polyesterplatte zulaminiert. Auch diese Platte wurde mittels einer Gummiwalze manuell angedrückt. Der Verbund wurde für 2 h bei 23 °C und 50 % rel. Lf äquilibriert.

Anschließend wurde ein manueller Ablöseversuch unternommen, indem an dem Anfasser in Richtung der Verklebungsebene und in Verlängerung der Strukturelemente verstreckt wurde. Die Selbstklebefolie ließ sich erfolgreich aus dem Klebeverbund lösen, ohne sichtbare Rückstände zurückzulassen. Zudem zeigte ein manueller Test des Verbunds eine hohe Verklebungsfestigkeit. So konnte der Klebeverbund beim Spreiten nicht ohne weiteres auseinandergenommen werden.

### Beispiel 3:

50,0 Gew.-% Kraton D1152 ES, 49,0 Gew.-% Dercolyte A115, 0,5 Gew.-% Irganox 1010 und 0,5 % Irgafos 168 wurden in einem Doppelschneckenextruder compoundiert und inline einer Extrusionsdüse zugeführt. Der Austrittsspalt der Extrusionsdüse war mit einem Shim 3 so modifiziert, dass ein Teil der ausgeformten Schmelze (HK1) durchgängig war und ein Teil der Schmelze aus einer Serie von Strukturelementen (HK2) bestand. HK1 wurde mittels ihrer unteren Seite auf einem beidseitig silikonisierten Trennpapier abgelegt, das über eine Kühlwalze geführt wurde.

Es resultierte Rollenmaterial mit einer durchgängigen Haftklebemasseschicht HK1 und Strukturelementen HK2. Ergebnisse der Bestimmung der Abmessungen der einzelnen Elemente sind in Tabelle 1 zusammengefasst.

Aus dem auf diese Weise erhaltenen Rollenmaterial wurden Haftklebefolien herausgeschnitten mit einer Länge von 40 mm und einer Breite von 60 mm. Die Strukturelemente waren parallel zur Länge der Selbstklebefolie ausgerichtet. Das so erzeugte Selbstklebefolienmuster wurde mit einer Gummiwalze manuell auf eine Polyesterplatte laminiert, so dass die Folie den Rand der Polyesterplatte um etwa 10 mm überragte. Dieser Teil wurde mit passend zurechtgeschnittenen Polyesterfolienabschnitten als Anfasser gestaltet. Die strukturierte Seite des Haftklebefolienmusters zeigte zu der Polyesterplatte. Anschließend wurde der Trennliner ausgedeckt und auf der offenen Haftklebeoberfläche eine weitere Polyesterplatte zulaminiert. Auch diese Platte wurde mittels einer Gummiwalze manuell angedrückt. Der Verbund wurde für 2 h bei 23 °C und 50 % rel. Lf äquilibriert.

Anschließend wurde ein manueller Ablöseversuch unternommen, indem an dem Anfasser in Richtung der Verklebungsebene und in Verlängerung der Strukturelemente verstreckt wurde. Die Selbstklebefolie ließ sich erfolgreich aus dem Klebeverbund lösen, ohne sichtbare Rückstände zurückzulassen. Zudem zeigte ein manueller Test des Verbunds eine hohe Verklebungsfestigkeit. So konnte der Klebeverbund beim Spreiten nicht ohne weiteres auseinandergenommen werden.

### Vergleichsbeispiel 4:

Vergleichsbeispiel 4 entspricht Beispiel 1, wobei kein Shim eingesetzt wurde und der Austrittsspalt der Extrusionsdüse dünner war.

Es resultierte somit Rollenmaterial mit einer durchgängigen Haftklebemasseschicht HK1, auf der keine Strukturelemente angeordnet waren. Die Dicke der Haftklebemasseschicht betrug 82 µm. Ergebnisse der Bestimmung der Abmessungen sind in Tabelle 1 zusammengefasst.

In dem wie in Beispiel 1 durchgeführten Ablöseversuch ließ sich der Halfklebestreifen nicht aus dem Klebeverbund lösen, sondern riss im Bereich der Klebefuge ab.

### Vergleichsbeispiel 5:

Vergleichsbeispiel 5 entspricht Beispiel 1, wobei kein Shim eingesetzt wurde.

Es resultierte somit Rollenmaterial mit einer durchgängigen Haftklebemasseschicht HK1, auf der keine Strukturelemente angeordnet waren. Die Dicke der Haftklebemasseschicht betrug 205 µm. Ergebnisse der Bestimmung der Abmessungen sind in Tabelle 1 zusammengefasst.

In dem wie in Beispiel 1 durchgeführten Ablöseversuch war eine deutlich höhere Kraft spürbar, die zum Verstrecken erforderlich war. Es musste mehrfach nachgefasst werden, um den Haftklebestreifen in mehreren Ansätzen aus dem Klebeverbund zu lösen.

**Tabelle 1.**

| | Beispiel 1 | Beispiel 2 | Beispiel 3 | Vergleichsbeispiel 4 | Vergleichsbeispiel 5 |
|---|---|---|---|---|---|
| Gesamtdicke D* | 222 µm | 230 µm | 219 µm | 82 µm | 205 µm |
| Dicke D_{HK1} | 95 µm | 115 µm | 79 µm | 82 µm | 205 µm |
| Steg höhe d_{HK2} | 127 µm | 115 µm | 140 µm | - | - |
| Mittlere Breite b(HK2) | 1,5 mm | 2,0 mm | 1,3 mm | - | - |
| Mittlerer Abstand zwischen | 2,1 mm | 2,5 mm | 2,4 mm | - | - |
| benachbarten Stegen a(HK2) | | | | | |

| | | | | | |
|---|---|---|---|---|---|
| *die Gesamtdicke des Haftklebestreifens umfasst in der vorliegenden Anmeldung die Steghöhe, d.h. die Dicke der Strukturelemente. | | | | | |

Insbesondere folgende Ausführungsformen sind von der Erfindung umfasst:
Erfindungsgemäß ist ein Haftklebestreifen, der sich durch dehnendes Verstrecken im Wesentlichen in der Verklebungsebene rückstands- und zerstörungsfrei wieder ablösen lässt, umfassend eine Haftklebemasseschicht HK1, dadurch gekennzeichnet, dass
mindestens eine Oberfläche der Haftklebemasseschicht HK1 ein oder mehrere, vorzugsweise mehrere, haftklebrige Strukturelemente aufweist, die zu einem strukturierten Oberflächenprofil des Haftklebestreifens führen,
wobei vorzugsweise die Haftklebemasseschicht HK1 und die Strukturelemente zusammen einen einschichtigen Aufbau darstellen,
wobei die Strukturelemente unabhängig voneinander eine Breite von 500 bis 5000 µm aufweisen und die Abstände zwischen benachbarten Strukturelementen unabhängig voneinander 1000 bis 25000 µm beträgt.

In einer bevorzugten Ausführungsform ist ein solcher Haftklebestreifen
dadurch gekennzeichnet, dass
die Strukturelemente, die die Oberfläche der Haftklebemasseschicht HK1 aufweist, aus einer Haftklebemasseschicht HK2 hergestellt sind, und sofern vorhanden die Strukturelemente, die die gegenüberliegende Oberfläche der Haftklebemasseschicht HK1 aufweist, aus einer Haftklebemasseschicht HK4 hergestellt sind.

In einer bevorzugten Ausführungsform ist ein Haftklebestreifen nach einer der vorhergehenden Ausführungsformen
dadurch gekennzeichnet, dass
die Haftklebemasseschicht HK1 und die Strukturelemente die gleiche oder eine unterschiedliche chemische Zusammensetzung aufweisen, vorzugsweise die gleiche chemische Zusammensetzung aufweisen.

In einer bevorzugten Ausführungsform ist ein Haftklebestreifen nach einer dervorhergehenden Ausführungsformen,
dadurch gekennzeichnet, dass
der Haftklebestreifen aus der Haftklebemasseschicht HK1 sowie den ein oder mehreren haftklebrigen Strukturelementen besteht, die mindestens eine Oberfläche, vorzugsweise genau eine Oberfläche, der Haftklebemasseschicht HK1 aufweist.

In einer bevorzugten Ausführungsform ist ein Haftklebestreifen nach einer der vorhergehenden Ausführungsformen,
dadurch gekennzeichnet, dass
genau eine Oberfläche der Haftklebemasseschicht HK1 die ein oder mehreren haftklebrigen Strukturelementen aufweist und auf der den Strukturelementen gegenüberliegenden Oberfläche der Haftklebemasseschicht HK1 ein permanenter Träger angeordnet ist, wobei typischerweise auf der der Haftklebemasseschicht HK1 gegenüberliegenden Oberfläche des permanenten Trägers eine weitere Haftklebemasseschicht HK3 angeordnet ist, wobei die beiden Haftklebemasseschichten HK1 und HK3 sich hinsichtlich ihrer chemischen Zusammensetzung und/oder Dicke unterscheiden oder gleich sein können.

In einer bevorzugten Ausführungsform ist ein solcher Haftklebestreifen nachder vorstehenden Ausführungsform
dadurch gekennzeichnet, dass
die dem permanenten Träger gegenüberliegende Oberfläche der weiteren Haftklebemasseschicht HK3 ein oder mehrere, vorzugsweise mehrere, haftklebrige Strukturelemente aufweist, wobei vorzugsweise die Haftklebemasseschicht HK3 und die Strukturelemente zusammen einen einschichtigen Aufbau darstellen.

Bevorzugt ist auch ein solcher Haftklebestreifen nach einer der vorstehenden Ausführungsformen, der
dadurch gekennzeichnet ist, dass
die Strukturelemente, die die Oberfläche der Haftklebemasseschicht HK3 aufweist, aus einer Haftklebemasseschicht HK4 hergestellt sind.

Bevorzugt ist auch ein Haftklebestreifen nach einer der vorstehenden Ausführungsformen, der
dadurch gekennzeichnet ist, dass
die Haftklebemasseschicht HK3 und die Strukturelemente, die sie aufweist, die gleiche oder eine unterschiedliche chemische Zusammensetzung aufweisen, vorzugsweise die gleiche chemische Zusammensetzung aufweisen.

In einer bevorzugten Ausführungsform ist ein Haftklebestreifen nach einer dervorhergehenden Ausführungsformen
dadurch gekennzeichnet, dass
die Strukturelemente regelmäßig oder unregelmäßig auf der Haftklebemasseschicht vorliegen, wobei beispielsweise die Strukturelemente derart auf der Haftklebemasseschicht vorliegen, dass die entsprechende Oberfläche des Haftklebestreifens an die Oberflächenstruktur des zu verklebenden Substrats angepasst ist.

In einer bevorzugten Ausführungsform ist ein Haftklebestreifen nach einer der vorhergehenden Ausführungsformen
dadurch gekennzeichnet, dass
die Strukturelemente eine wiederkehrende oder nicht wiederkehrende Verortung aufweisen.

In einer bevorzugten Ausführungsform ist ein Haftklebestreifen nach einer der vorhergehenden Ausführungsformen,
dadurch gekennzeichnet, dass
die Strukturelemente durchgängig oder nicht durchgängig auf der Haftklebemasseschicht vorliegen, wobei die Strukturelemente beispielsweise Unterbrechungen aufweisen oder vor der Kante der Haftklebemasseschicht enden.

In einer bevorzugten Ausführungsform ist ein Haftklebestreifen nach einer der vorhergehenden Ausführungsformen
dadurch gekennzeichnet, dass
die einzelnen Strukturelemente auf der Haftklebemasseschicht eine Änderung der Breite und/oder der Dicke, vorzugsweise der Dicke, aufweisen, wobei sie vorzugsweise eine kontinuierliche Verringerung der Dicke, beispielsweise gegen null, zu einem Ende des Haftklebstreifens aufweisen, wobei es sich, falls der Haftklebstreifen einen Anfasser umfasst, um das dem Anfasser gegenüber liegende Ende des Haftklebestreifens handelt.

In einer bevorzugten Ausführungsform ist ein Haftklebestreifen nacheiner der vorhergehenden Ausführungsformen
dadurch gekennzeichnet, dass
die Strukturelemente streifenförmig sind, vorzugsweise gerade oder wellenförmig sind, und insbesondere gerade sind.

In einer bevorzugten Ausführungsform ist ein Haftklebestreifen nacheiner der vorhergehenden Ausführungsformen
dadurch gekennzeichnet, dass
die Strukturelemente zur Abziehrichtung einen Winkel von 0° bis 45°, vorzugsweise höchstens 30°, insbesondere etwa 0° bilden.

In einer bevorzugten Ausführungsform ist ein Haftklebestreifen nacheiner der vorhergehenden Ausführungsformen
dadurch gekennzeichnet, dass
die Strukturelemente bündig mit der Haftklebemasseschicht HK1 und/oder HK3, auf der sie vorliegen, ausgerichtet sind.

In einer bevorzugten Ausführungsform ist ein Haftklebestreifen nacheiner der vorherigen Ausführungsformen
dadurch gekennzeichnet, dass
die Strukturelemente nicht bündig mit der Haftklebemasseschicht HK1 und/oder HK3, auf der sie vorliegen, ausgerichtet sind.

In einer bevorzugten Ausführungsform ist ein Haftklebestreifen nacheiner der vorhergehenden Ausführungsformen
dadurch gekennzeichnet, dass
die Strukturelemente unabhängig voneinander eine Breite von 1000 bis 3500 µm, insbesondere 1500 bis 2500 µm, und/oder eine Dicke von 15 bis 250 µm, vorzugsweise 20 bis 200 µm, insbesondere 50 bis 150 µm, aufweisen.

In einer bevorzugten Ausführungsform ist ein Haftklebestreifen nacheiner der vorhergehenden Ausführungsformen
dadurch gekennzeichnet, dass
die Dicke der einzelnen Strukturelemente höchstens 20 %, vorzugsweise höchstens 10 %, voneinander abweicht und insbesondere identisch ist, und/oder die Breite der einzelnen Strukturelemente höchstens 20 %, vorzugsweise höchstens 10 %, voneinander abweicht und insbesondere identisch ist.

In einer bevorzugten Ausführungsform ist ein Haftklebestreifen nach einer der vorhergehenden Ausführungsformen
dadurch gekennzeichnet, dass
die Abstände zwischen benachbarten Strukturelementen unabhängig voneinander 1500 bis 5000 µm und insbesondere 2000 bis 3000 µm betragen.

In einer bevorzugten Ausführungsform ist ein Haftklebestreifen nach einer der vorhergehenden Ausführungsformen
dadurch gekennzeichnet, dass
die einzelnen Abstände zwischen benachbarten Strukturelementen höchstens 20 %, vorzugsweise höchstens 10 %, voneinander abweichen und insbesondere identisch sind.

In einer bevorzugten Ausführungsform ist ein Haftklebestreifen nach einer der vorhergehenden Ausführungsformen
dadurch gekennzeichnet, dass
die mehreren Strukturelemente untereinander die gleiche chemische Zusammensetzung aufweisen.

In einer bevorzugten Ausführungsform ist ein Haftklebestreifen nach einer der vorherigen Ausführungsformen
dadurch gekennzeichnet, dass
die beiden Haftklebemasseschichten HK2 und HK4 sich hinsichtlich ihrer chemischen Zusammensetzung und/oder Dicke unterscheiden oder gleich sein können.

In einer bevorzugten Ausführungsform ist ein Haftklebestreifen nacheiner der vorhergehenden Ausführungsformen,
dadurch gekennzeichnet, dass
die Zugfestigkeit der Haftklebemasse der Haftklebemasseschicht HK1 und/oder HK3 mindestens 6 MPa, vorzugsweise 8 MPa, und insbesondere mindestens 10 MPa beträgt.

In einer bevorzugten Ausführungsform ist ein Haftklebestreifen nach einer der vorhergehenden Ausführungsformen
dadurch gekennzeichnet, dass
die Zugfestigkeit der Haftklebemasse der Strukturelemente gleich oder verschieden ist, vorzugsweise gleich oder geringer ist, zur Zugfestigkeit der Haftklebemasse der Haftklebemasseschicht HK1 und, falls vorhanden, HK3.

In einer bevorzugten Ausführungsform ist ein Haftklebestreifen nach einer der vorhergehenden Ausführungsformen
dadurch gekennzeichnet, dass
die maximale Dehnbarkeit der Haftklebemasse der Haftklebemasseschicht HK1 und/oder HK3 mindestens so groß ist wie, vorzugsweise größer ist als die maximale Dehnbarkeit der Haftklebemasse der Strukturelemente, die sie aufweist.

In einer bevorzugten Ausführungsform ist ein Haftklebestreifen nacheiner der vorhergehenden Ausführungsformen
dadurch gekennzeichnet, dass
(a) wenn der Haftklebestreifen keinen permanenten Träger umfasst, die Haftklebemasseschicht HK1 eine Dicke von 70 µm bis 1500 µm, vorzugsweise 75 bis 800 µm, bevorzugter 80 bis 250 µm, insbesondere 100 µm bis 200 µm, aufweist, und
(b) wenn der Haftklebestreifen einen permanenten Träger umfasst, die Haftklebemasseschicht HK1 und/oder HK3 eine Dicke von 15 µm bis 500 µm, vorzugsweise 20 bis 250 µm, insbesondere 50 µm bis 150 µm, aufweist.

In einer bevorzugten Ausführungsform ist ein Haftklebestreifen nach einer der vorstehenden Ausführungsformen
dadurch gekennzeichnet, dass
die Zugfestigkeit des permanenten Trägers mindestens so groß ist wie, vorzugsweise größer ist als die Zugfestigkeit der im Haftklebestreifen vorliegenden Haftklebemasse(n) und/oder die maximale Dehnbarkeit des permanenten Trägers mindestens so groß ist wie, vorzugsweise größer ist als die maximale Dehnbarkeit der im Haftklebestreifen vorliegenden Haftklebemasse(n).

In einer bevorzugten Ausführungsform ist ein Haftklebestreifen nacheiner der vorstehenden Ausführungsformen
dadurch gekennzeichnet, dass
der permanente Träger eine Dicke von 10 µm bis 200 µm, vorzugsweise 20 µm bis 100 µm und insbesondere 30 µm bis 80 µm aufweist.

In einer bevorzugten Ausführungsform ist ein Haftklebestreifen nacheiner der vorstehenden Ausführungsformen
dadurch gekennzeichnet, dass
der permanente Träger ein Polyurethanträger oder ein Träger aus thermoplastischem Elastomer ist, vorzugsweise ein Polyurethanträger ist.

In einer bevorzugten Ausführungsform ist ein Haftklebestreifen nach einer der vorhergehenden Ausführungsformen
dadurch gekennzeichnet, dass
der Haftklebestreifen eine Länge von 5 mm bis 300 mm, vorzugsweise 20 bis 200 mm, insbesondere 50 bis 100 mm, eine Breite von 5 bis 500 mm, vorzugsweise 20 bis 300 mm, insbesondere 50 bis 200 mm, und/oder eine Dicke von 100 µm bis 2000 µm, vorzugsweise 150 bis 1000 µm, insbesondere 200 bis 300 µm aufweist.

In einer bevorzugten Ausführungsform ist ein Haftklebestreifen nacheiner der vorhergehenden Ausführungsformen
dadurch gekennzeichnet, dass
die Haftklebemasseschicht(en) und Strukturelemente, unabhängig voneinander, auf Vinylaromatenblockcopolymer, Poly(meth)acrylat, Poly(meth)acrylatblockcopolymer, Silikon, Nitrilkautschuk oder einer Mischung davon basieren.

In einer bevorzugten Ausführungsform ist ein Haftklebestreifen nach einer der vorhergehenden Ausführungsformen
dadurch gekennzeichnet, dass
sich der Haftklebestreifen beim Abziehen in einem Winkel von mehr als 30° gegenüber der Verklebungsebene, wie zum Beispiel mindestens 90° gegenüber der Verklebungsebene, rückstands- und zerstörungsfrei wieder ablösen lässt.

Erfindungsgemäß ist auch ein Verfahren zur Herstellung eineserfindungsgemäßen Haftklebestreifens, umfassend die folgenden Schritte:
- Herstellen der Haftklebemasseschicht(en) und ein oder mehreren Strukturelementen aus Lösung oder lösungsmittelfrei in einem Extrusionsverfahren,
- Laminieren der Strukturelemente auf die Haftklebemasseschicht(en), und
- optional Laminieren der Haftklebemasseschicht(en) auf den permanenten Träger.

Bevorzugt ist auch ein Verfahren zur Herstellung eines erfindungsgemäßen Haftklebestreifens, umfassend die folgenden Schritte:
- Herstellen der Haftklebemasseschicht(en) lösungsmittelfrei in einem Extrusionsverfahren,
- gleichzeitiges oder anschließendes Zukaschieren der ein oder mehreren Strukturelemente lösungsmittelfrei in einem Extrusionsverfahren, und
- optional Laminieren der Haftklebemasseschicht(en) auf den permanenten Träger.

Bevorzugt ist auch ein Verfahren zur Herstellung eines erfindungsgemäßen Haftklebestreifens, umfassend die folgenden Schritte:
- Herstellen mindestens einer Haftklebemasse lösungsmittelfrei in einem Extrusionsverfahren,
- Zuführen der mindestens einen Haftklebemasse einer Extrusions- oder Hotmeltdüse, wobei im Bereich der Düsenlippe im Austrittsspalt der Düse auf zumindest einer Seite ein Shim vorgesehen ist, der einen Teilbereich des Austrittsspalts verengt, so dass sich mindestens eine Haftklebemasseschicht ergibt, bei der mindestens eine Oberfläche ein oder mehrere haftklebrige Strukturelemente aufweist, und
- optional Laminieren der Haftklebemasseschicht(en) auf den permanenten Träger.

Bevorzugt ist ein Haftklebestreifen herstellbar nach einem Verfahrengemäß einer der vorhergehenden Ausführungsformen.

Erfindungsgemäß ist auch die Verwendung eines erfindungsgemäßen Haftklebestreifens zur Verklebung von Brennstoffzellen, von Schildern und Anzeigetafeln in der Druckindustrie oder von typischerweise leichten bis mittelschweren Gegenständen im Haushalt und im Bürobereich.

## Patentansprüche

1. Haftklebestreifen, der sich durch dehnendes Verstrecken im Wesentlichen in der Verklebungsebene rückstands- und zerstörungsfrei wieder ablösen lässt, umfassend eine Haftklebemasseschicht HK1,
**dadurch gekennzeichnet, dass**
mindestens eine Oberfläche der Haftklebemasseschicht HK1 ein oder mehrere, vorzugsweise mehrere, haftklebrige Strukturelemente aufweist, die zu einem strukturierten Oberflächenprofil des Haftklebestreifens führen,
wobei vorzugsweise die Haftklebemasseschicht HK1 und die Strukturelemente zusammen einen einschichtigen Aufbau darstellen
wobei die Strukturelemente unabhängig voneinander eine Breite von 500 bis 5000 µm aufweisen und die Abstände zwischen benachbarten Strukturelementen unabhängig voneinander 1000 bis 25000 µm beträgt.

2. Haftklebestreifen nach Anspruch 1,
**dadurch gekennzeichnet, dass**
die Strukturelemente, die die Oberfläche der Haftklebemasseschicht HK1 aufweist, aus einer Haftklebemasseschicht HK2 hergestellt sind, und sofern vorhanden die Strukturelemente, die die gegenüberliegende Oberfläche der Haftklebemasseschicht HK1 aufweist, aus einer Haftklebemasseschicht HK4 hergestellt sind.

3. Haftklebestreifen nach Anspruch 1 oder 2,
**dadurch gekennzeichnet, dass**
der Haftklebestreifen aus der Haftklebemasseschicht HK1 sowie den ein oder mehreren haftklebrigen Strukturelementen besteht, die mindestens eine Oberfläche, vorzugsweise genau eine Oberfläche, der Haftklebemasseschicht HK1 aufweist.

4. Haftklebestreifen nach einem der vorhergehenden Ansprüche,
**dadurch gekennzeichnet, dass**
genau eine Oberfläche der Haftklebemasseschicht HK1 die ein oder mehreren haftklebrigen Strukturelementen aufweist und auf der den Strukturelementen gegenüberliegenden Oberfläche der Haftklebemasseschicht HK1 ein permanenter Träger angeordnet ist, wobei typischerweise auf der der Haftklebemasseschicht HK1 gegenüberliegenden Oberfläche des permanenten Trägers eine weitere Haftklebemasseschicht HK3 angeordnet ist, wobei die beiden Haftklebemasseschichten HK1 und HK3 sich hinsichtlich ihrer chemischen Zusammensetzung und/oder Dicke unterscheiden oder gleich sein können.

5. Haftklebestreifen nach Anspruch 4,
**dadurch gekennzeichnet, dass**
die dem permanenten Träger gegenüberliegende Oberfläche der weiteren Haftklebemasseschicht HK3 ein oder mehrere, vorzugsweise mehrere, haftklebrige Strukturelemente aufweist, wobei vorzugsweise die Haftklebemasseschicht HK3 und die Strukturelemente zusammen einen einschichtigen Aufbau darstellen.

6. Haftklebestreifen nach Anspruch 5,
**dadurch gekennzeichnet, dass**
die Strukturelemente, die die Oberfläche der Haftklebemasseschicht HK3 aufweist, aus einer Haftklebemasseschicht HK4 hergestellt sind.

7. Haftklebestreifen nach einem der vorhergehenden Ansprüche,
**dadurch gekennzeichnet, dass**
die Strukturelemente streifenförmig sind, vorzugsweise gerade oder wellenförmig sind, und insbesondere gerade sind.

8. Haftklebestreifen nach einem der vorhergehenden Ansprüche,
**dadurch gekennzeichnet, dass**
die Strukturelemente zur Abziehrichtung einen Winkel von 0° bis 45°, vorzugsweise höchstens 30°, insbesondere etwa 0° bilden.

9. Haftklebestreifen nach einem der vorhergehenden Ansprüche,
**dadurch gekennzeichnet, dass**
(a) wenn der Haftklebestreifen keinen permanenten Träger umfasst, die Haftklebemasseschicht HK1 eine Dicke von 70 µm bis 1500 µm, vorzugsweise 75 bis 800 µm, bevorzugter 80 bis 250 µm, insbesondere 100 µm bis 200 µm, aufweist, und
(b) wenn der Haftklebestreifen einen permanenten Träger umfasst, die Haftklebemasseschicht HK1 und/oder HK3 eine Dicke von 15 µm bis 500 µm, vorzugsweise 20 bis 250 µm, insbesondere 50 µm bis 150 µm, aufweist.

10. Haftklebestreifen nach einem der vorhergehenden Ansprüche,
**dadurch gekennzeichnet, dass**
die Haftklebemasseschicht(en) und Strukturelemente, unabhängig voneinander, auf Vinylaromatenblockcopolymer, Poly(meth)acrylat, Poly(meth)acrylatblockcopolymer, Silikon, Nitrilkautschuk oder einer Mischung davon basieren.

11. Verfahren zur Herstellung eines Haftklebestreifens nach einem der vorhergehenden Ansprüche, umfassend die folgenden Schritte:
- Herstellen der Haftklebemasseschicht(en) und ein oder mehreren Strukturelementen aus Lösung oder lösungsmittelfrei in einem Extrusionsverfahren,
- Laminieren der Strukturelemente auf die Haftklebemasseschicht(en), und
- optional Laminieren der Haftklebemasseschicht(en) auf den permanenten Träger.

12. Verfahren zur Herstellung eines Haftklebestreifens nach einem der Ansprüche 1 bis 10, umfassend die folgenden Schritte:
- Herstellen der Haftklebemasseschicht(en) lösungsmittelfrei in einem Extrusionsverfahren,
- gleichzeitiges oder anschließendes Zukaschieren der ein oder mehreren Strukturelemente lösungsmittelfrei in einem Extrusionsverfahren, und
- optional Laminieren der Haftklebemasseschicht(en) auf den permanenten Träger.

13. Verfahren zur Herstellung eines Haftklebestreifens nach einem der Ansprüche 1 bis 10, umfassend die folgenden Schritte:
- Herstellen mindestens einer Haftklebemasse lösungsmittelfrei in einem Extrusionsverfahren,
- Zuführen der mindestens einen Haftklebemasse einer Extrusions- oder Hotmeltdüse, wobei im Bereich der Düsenlippe im Austrittsspalt der Düse auf zumindest einer Seite ein Shim vorgesehen ist, der einen Teilbereich des Austrittsspalts verengt, so dass sich mindestens eine Haftklebemasseschicht ergibt, bei der mindestens eine Oberfläche ein oder mehrere haftklebrige Strukturelemente aufweist, und
- optional Laminieren der Haftklebemasseschicht(en) auf den permanenten Träger.

14. Verwendung eines Haftklebestreifens nach einem der Ansprüche 1 bis 10 zur Verklebung von Brennstoffzellen, von Schildern und Anzeigetafeln in der Druckindustrie oder von Gegenständen im Haushalt und im Bürobereich.

## Claims

1. Pressure-sensitive adhesive strip redetachable without residue or destruction by extensive stretching substantially in the bond plane, comprising a layer HK1 of pressure-sensitive adhesive,
**characterized in that**
at least one surface of the pressure-sensitive adhesive layer HK1 has one or more, preferably two or more, pressure-sensitively adhesive structural elements, which lead to a structured surface profile of the pressure-sensitive adhesive strip,
where preferably the pressure-sensitive adhesive layer HK1 and the structural elements together constitute a single-layer construction
where the structural elements independently of one another have a width of 500 to 5000 pm and the distances between adjacent structural elements independently of one another are 1000 to 25 000 pm.

2. Pressure-sensitive adhesive strip according to Claim 1,
**characterized in that**
the structural elements possessed by the surface of the pressure-sensitive adhesive layer HK1 are produced from a layer HK2 of pressure-sensitive adhesive, and, where present, the structural elements possessed by the opposite surface of the pressure-sensitive adhesive layer HK1 are produced from a layer HK4 of pressure-sensitive adhesive.

3. Pressure-sensitive adhesive strip according to Claim 1 or 2,
**characterized in that**
the pressure-sensitive adhesive strip consists of the pressure-sensitive adhesive layer HK1 and also of the one or more pressure-sensitively adhesive structural elements possessed by at least one surface, preferably exactly one surface, of the pressure-sensitive adhesive layer HK1.

4. Pressure-sensitive adhesive strip according to any of the preceding claims,
**characterized in that**
exactly one surface of the pressure-sensitive adhesive layer HK1 has the one or more pressure-sensitively adhesive structural elements, and a permanent carrier is disposed on the surface of the pressure-sensitive adhesive layer HK1 that is opposite the structural elements, where typically, on the surface of the permanent carrier that is opposite the pressure-sensitive adhesive layer HK1, a further layer HK3 of pressure-sensitive adhesive is disposed, where the two pressure-sensitive adhesive layers HK1 and HK3 may be the same or differ in terms of their chemical composition and/or thickness.

5. Pressure-sensitive adhesive strip according to Claim 4,
**characterized in that**
the surface of the further pressure-sensitive adhesive layer HK3 that is opposite the permanent carrier has one or more, preferably two or more, pressure-sensitively adhesive structural elements, where preferably the pressure-sensitive adhesive layer HK3 and the structural elements together constitute a single-layer construction.

6. Pressure-sensitive adhesive strip according to Claim 5,
**characterized in that**
the structural elements possessed by the surface of the pressure-sensitive adhesive layer HK3 are produced from a pressure-sensitive adhesive layer HK4.

7. Pressure-sensitive adhesive strip according to any of the preceding claims,
**characterized in that**
the structural elements are strip-shaped, preferably straight or undulatory, and more particularly straight.

8. Pressure-sensitive adhesive strip according to any of the preceding claims,
**characterized in that**
the structural elements form an angle of 0° to 45°, preferably at most 30°, more particularly about 0°, with respect to the removal direction.

9. Pressure-sensitive adhesive strip according to any of the preceding claims,
**characterized in that**
(a) if the pressure-sensitive adhesive strip comprises no permanent carrier, the pressure-sensitive adhesive layer HK1 has a thickness of 70 pm to 1500 pm, preferably 75 to 800 pm, more preferably 80 to 250 pm, more particularly 100 pm to 200 pm, and
(b) if the pressure-sensitive adhesive strip comprises a permanent carrier, the pressure-sensitive adhesive layer HK1 and/or HK3 has a thickness of 15 pm to 500 pm, preferably 20 to 250 pm, more particularly 50 pm to 150 pm.

10. Pressure-sensitive adhesive strip according to any of the preceding claims,
**characterized in that**
the pressure-sensitive adhesive layer(s) and structural elements, independently of one another, are based on vinylaromatic block copolymer, poly(meth)acrylate, poly(meth)acrylate block copolymer, silicone, nitrile rubber, or a mixture thereof.

11. Method for producing a pressure-sensitive adhesive strip according to any of the preceding claims, comprising the following steps:
- producing the pressure-sensitive adhesive layer(s) and one or more structural elements from solution or solventlessly in an extrusion method,
- laminating the structural elements onto the pressure-sensitive adhesive layer(s), and
- optionally laminating the pressure-sensitive adhesive layer(s) onto the permanent carrier.

12. Method for producing a pressure-sensitive adhesive strip according to any of Claims 1 to 10, comprising the following steps:
- producing the pressure-sensitive adhesive layer(s) solventlessly in an extrusion method,
- simultaneously or subsequently laminating-on the one or more structural elements solventlessly in an extrusion method, and
- optionally laminating the pressure-sensitive adhesive layer(s) onto the permanent carrier.

13. Method for producing a pressure-sensitive adhesive strip according to any of Claims 1 to 10, comprising the following steps:
- producing at least one pressure-sensitive adhesive solventlessly in an extrusion method,
- feeding the at least one pressure-sensitive adhesive to an extrusion die or hotmelt die, where, in the region of the die lip in the exit slot of the die, on at least one side a shim is provided which narrows a subregion of the exit slot, to produce at least one pressure-sensitive adhesive layer in which at least one surface has one or more pressure-sensitively adhesive structural elements, and
- optionally laminating the pressure-sensitive adhesive layer(s) onto the permanent carrier.

14. Use of a pressure-sensitive adhesive strip according to any of Claims 1 to 10 for the bonding of fuel cells, of signs and display panels in the printing industry, or of articles in the household and in the office sector.

## Revendications

1. Bande autoadhésive qui peut être redétachée par étirage avec allongement, sensiblement dans le plan de collage, sans résidus et sans détérioration, comprenant une couche de masse autoadhésive HK1, **caractérisée en ce qu'**au moins une surface de la masse autoadhésive HK1 présente un ou plusieurs, de préférence plusieurs, éléments structuraux autoadhésifs, qui entraînent un profilé de surface structuré de la bande autoadhésive, la couche de masse autoadhésive HK1 et les éléments structuraux représentant de préférence ensemble une construction monocouche
les éléments structuraux présentant, indépendamment les uns des autres, une largeur de 500 à 5000 pm et les distances entre des éléments structuraux adjacents étant, indépendamment les unes des autres, de 1000 à 25.000 pm.

2. Bande autoadhésive selon la revendication 1, **caractérisée en ce que** les éléments structuraux, que présente la surface de la couche de masse autoadhésive HK1, sont préparés à partir d'une couche de masse autoadhésive HK2 et, s'ils sont présents, les éléments structuraux que la surface opposée de la couche de masse autoadhésive HK1 présente sont préparés à partir d'une couche de masse autoadhésive HK4.

3. Bande autoadhésive selon la revendication 1 ou 2, **caractérisée en ce que** la bande autoadhésive est constituée par la couche de masse autoadhésive HK1 ainsi que par ledit un ou lesdits plusieurs éléments structuraux autoadhésifs, que présente au moins une surface, de préférence exactement une surface, de la couche de masse autoadhésive HK1.

4. Bande adhésive selon l'une quelconque des revendications précédentes, **caractérisée en ce qu'**exactement une surface de la couche de masse autoadhésive HK1 présente ledit un ou lesdits plusieurs éléments structuraux autoadhésifs et un support permanent est agencé sur la surface de la couche de masse autoadhésive HK1 opposée aux éléments structuraux, une autre couche de masse autoadhésive HK3 étant habituellement agencée sur la surface du support permanent opposée à la couche de masse autoadhésive HK1, les deux couches de masse autoadhésive HK1 et HK3 pouvant se distinguer en ce qui concerne leur composition chimique et/ou leur épaisseur ou pouvant être identiques.

5. Bande autoadhésive selon la revendication 4, **caractérisée en ce que** la surface opposée au support permanent de l'autre couche de masse autoadhésive HK3 présente un ou plusieurs, de préférence plusieurs, éléments structuraux autoadhésifs, la couche de masse autoadhésive HK3 et les éléments structuraux représentant de préférence ensemble une construction monocouche.

6. Bande autoadhésive selon la revendication 5, **caractérisée en ce que** les éléments structuraux, que présente la surface de la couche de masse autoadhésive HK3, sont préparés à partir d'une couche de masse autoadhésive HK4.

7. Bande autoadhésive selon l'une des revendications précédentes, **caractérisée en ce que** les éléments structuraux sont en forme de bande, de préférence droits ou ondulés, et en particulier droits.

8. Bande autoadhésive selon l'une des revendications précédentes, **caractérisée en ce que** les éléments structuraux forment, par rapport à la direction de retrait, un angle de 0° à 45°, de préférence d'au plus 30°, en particulier d'environ 0°.

9. Bande autoadhésive selon l'une des revendications précédentes, **caractérisée en ce que**
(a) lorsque la bande autoadhésive ne comprend pas de support permanent, la couche de masse autoadhésive HK1 présente une épaisseur de 70 pm à 1500 pm, de préférence de 75 à 800 pm, plus préférablement de 80 à 250 pm, en particulier de 100 pm à 200 pm, et
(b) lorsque la bande autoadhésive comprend un support permanent, la couche de masse autoadhésive HK1 et/ou HK3 présente une épaisseur de 15 pm à 500 pm, de préférence de 20 à 250 pm, en particulier de 50 pm à 150 pm.

10. Bande autoadhésive selon l'une des revendications précédentes, **caractérisée en ce que** la/les couche(s) de masse autoadhésive et les éléments structuraux, indépendamment les uns des autres, sont à base d'un copolymère séquencé d'aromatique de vinyle, de poly(méth)acrylate, d'un copolymère séquencé de poly(méth)acrylate, de silicone, de caoutchouc nitrile ou d'un mélange de ceux-ci.

11. Procédé pour la préparation d'une bande autoadhésive selon l'une des revendications précédentes, comprenant les étapes suivantes :
- préparation de la/des couche(s) de masse autoadhésive et d'un ou de plusieurs éléments structuraux à partir d'une solution ou sans solvant dans un procédé d'extrusion,
- stratification des éléments structuraux sur la/les couche(s) de masse autoadhésive et
- éventuellement stratification de la/des couche(s) de masse autoadhésive sur le support permanent.

12. Procédé pour la préparation d'une bande autoadhésive selon l'une des revendications 1 à 10, comprenant les étapes suivantes :
- préparation de la/des couche(s) de masse autoadhésive sans solvant dans un procédé d'extrusion,
- contrecollage simultané ou consécutif dudit un ou desdits plusieurs éléments structuraux sans solvant dans un procédé d'extrusion et
- éventuellement stratification de la/des couche(s) de masse autoadhésive sur le support permanent.

13. Procédé pour la préparation d'une bande autoadhésive selon l'une des revendications 1 à 10, comprenant les étapes suivantes :
- préparation d'au moins une masse autoadhésive sans solvant dans un procédé d'extrusion,
- introduction de ladite au moins une masse autoadhésive dans une buse d'extrusion ou de fusion à chaud, au moins une cale étant prévue dans la zone de la lèvre de buse dans la fente de sortie de la buse, sur au moins un côté, laquelle cale rétrécit une zone partielle de la fente de sortie de telle sorte qu'on obtient au moins une couche de masse autoadhésive pour laquelle au moins une surface présente un ou plusieurs éléments structuraux autoadhésifs et
- éventuellement stratification de la/des couche(s) de masse autoadhésive sur le support permanent.

14. Utilisation d'une bande autoadhésive selon l'une des revendications 1 à 10 pour le collage de piles à combustible, de panneaux et de tableaux d'affichage dans l'industrie de l'impression ou d'objets dans les ménages et dans le domaine du bureau.
